# EUROPÄISCHE PATENTSCHRIFT

(11) **EP 3 390 002 B1**
(45) Veröffentlichungstag und Bekanntmachung des Hinweises auf die Patenterteilung: **31.05.2023**
(21) Anmeldenummer: 16816251.9
(22) Anmeldetag: 14.12.2016
(51) Int. Cl.: B29C 64/165, B29C 64/171, B29C 64/241, B29C 64/176, B29C 64/245, B29C 64/295, B33Y 30/00

(54) **VORRICHTUNG UND VERFAHREN ZUR KONTINUIERLICHEN GENERATIVEN FERTIGUNG VON BAUTEILEN**
DEVICE AND METHOD FOR THE CONTINUOUS GENERATIVE MANUFACTURING OF COMPONENTS
DISPOSITIF DE FABRICATION ADDITIVE CONTINUE DE PIÈCES

(30) Priorität: 17.12.2015 DE 102015225757
(43) Veröffentlichungstag der Anmeldung: 24.10.2018
(73) Patentinhaber: Volkswagen Aktiengesellschaft, 38440 Wolfsburg (DE)
(72) Erfinder: FINDEISEN, Sebastian, 38102 Braunschweig (DE); BAEHRISCH, Susanne, 29693 Hodenhagen (DE)
(86) Internationale Anmeldenummer: PCT/EP2016/081056
(87) Internationale Veröffentlichungsnummer: WO 2017/102875

(56) Entgegenhaltungen:
- EP-A2- 2 708 297
- WO-A1-2014/039378
- DE-A1- 10 235 434
- DE-A1-102010 041 284
- DE-A1-102013 021 891

## Beschreibung

Die vorliegende Erfindung betrifft eine Vorrichtung und ein Verfahren zur kontinuierlichen generativen Fertigung von Bauteilen.

Zur Fertigung von Bauteilen sind sogenannte generative Verfahren bekannt. Dabei erfolgt ein schichtweises Auftragen und anschließendes Verfestigen eines Pulvers. Insbesondere ist es Stand der Technik, metallische Werkstoffe, Kunststoffe oder auch Sande auf diese Weise zu verarbeiten. Neben diskontinuierlichen generativen Verfahren sind weiterhin kontinuierliche generative Verfahren zur Fertigung von Bauteilen bekannt.

Kontinuierliche Verfahren zur generativen Fertigung von Bauteilen sind zum Beispiel gemäß der EP 2 289 462 B1 oder der DE 10 2010 015 451 A1 Stand der Technik. Bei diesen Verfahren ist es jedoch von Nachteil, dass ein schichtweiser Auftrag sowie das Verfestigen von jeweils nur einer Lage eines Pulvers unter einem bestimmten Winkel erfolgt, sodass die Ausbringung begrenzt ist.

Gemäß der DE 10 2013 021 891 A1 ist ein weiteres Verfahren zur kontinuierlichen generativen Fertigung von Bauteilen Stand der Technik. Demgemäß ist es bekannt, jeweils eine Auftragsvorrichtung und eine Verfestigungsvorrichtung zu einer Prozesseinheit zusammenzufassen. Mehrere dieser Prozesseinheiten sind jeweils um eine Schichtstärke zueinander versetzt angeordnet. Auf diese Weise können mehrere Schichten gleichzeitig auf einer als Förderband ausgeführten Arbeitsplattform aufgebaut werden. Grundsätzlich kann dabei eine beliebige Anzahl an Prozesseinheiten verwendet werden, sodass sich die Anzahl der gleichzeitig aufbauenden Schichten erhöht und eine sehr hohe Baurate erreicht werden kann. Nachteilig bei derartigen Anlagen ist es jedoch, dass diese, für eine kontinuierliche generative Fertigung von Bauteilen, prinzipbedingt eine sehr große Länge aufweisen. Weiterhin ist es nachteilig, bei den bekannten Vorrichtungen, dass die Höhe des möglichen Bauraums direkt proportional zu der Anzahl an notwendigen Prozesseinheiten ist. Beispielsweise erfordert eine Höhe des Bauraums von 250 mm rund 750 Verfestigungsvorrichtungen beziehungsweise Prozesseinheiten, was die Anlagenkosten erheblich erhöht.

Denkbar ist eine weitere Automatisierung der bekannten Anlagen, beispielsweise durch eine robotergestützte Entnahme der fertigen Bauteile. Eine signifikante Steigerung der Ausbringung ist dadurch jedoch nicht möglich.

Neben den genannten pulverbasierten kontinuierlichen Verfahren ist gemäß der Presseinformation des Fraunhofer-Instituts für Fertigungstechnik und angewandte Materialforschung (IFAM) vom 17.02.2015, Seiten 1 und 2, eine Fertigungsanlage Stand der Technik, die einen kontinuierlichen und automatisierten Betrieb für flüssige Kunststoffe ermöglicht. Dabei wird der untere Teil einer drehbaren Walze als Substrat in ein Polymer-Bad eingetaucht und durch mehrere Lichtquellen in definierter, zunehmender Entfernung beleuchtet, sodass das Polymer an unterschiedlichen Stufen auf der Oberfläche der Walze selektiv aushärtet. Durch schrittweise Drehung der Walze wird Schicht für Schicht ein Bauteil auf dem eingetauchten Teil der Walze aufgebaut. Vollendete Bauteile können auf der Oberseite der Walze von deren Oberfläche getrennt werden, sodass ein erneuter schichtweiser Aufbau eines weiteren Bauteils beginnen kann. Die beschriebene Vorrichtung ist jedoch auf die Verarbeitung flüssiger Kunststoffe beschränkt.

Erwähnt werden ferner die Druckschriften WO 2014/039378 A1, EP 2 708 297 A2 und DE 10 2010 041284 A1, die gattungsgemäße Vorrichtungen beziehungsweise Verfahren offenbaren. Als nächstliegender Stand der Technik aus der Druckschrift DE 102 35 434 A1 eine Vorrichtung und ein Verfahren zur schichtweisen, generativen Herstellung von dreidimensionalen Objekten durch selektives Verfestigen eines verfestigbaren flüssigen oder pulverförmigen Aufbaumaterials bekannt. Durch eine Drehbewegung des Baubereichs, in dem die Objekte hergestellt werden, gegenüber einer Materialauftragevorrichtung zum Auftragen von Schichten des Aufbaumaterials und einer Verfestigungseinrichtung, können die Materialauftragevorrichtung und die Verfestigungseinrichtung gleichzeitig an unterschiedlichen Stellen des Baubereichs eingesetzt werden.

Der vorliegenden Erfindung liegt die Aufgabe zugrunde, Bauteile auf einem möglichst geringen Bauraum durch Verfestigen eines pulverförmigen Werkstoffs kontinuierlich generativ mit einer hohen Baurate wirtschaftlich herzustellen.

Die Aufgabe wird erfindungsgemäß mittels einer Vorrichtung zur kontinuierlichen generativen Fertigung von Bauteilen nach Anspruch 1 sowie mittels eines entsprechenden Verfahrens gelöst.

Zur kontinuierlichen generativen Fertigung von Bauteilen, die aus mehreren aufeinander aufbauenden Schichten gebildet werden, sind mehrere Verfestigungsvorrichtungen zur Verfestigung eines aufgetragenen pulverförmigen Werkstoffs in einer ringförmigen Abfolge hintereinander gegenüber einer Arbeits- und Transportplattform angeordnet. Ausgehend von einer ersten Verfestigungsvorrichtung bis zu einer letzten Verfestigungsvorrichtung der Abfolge vergrößert sich dabei ein Abstand jeder einzelnen Verfestigungsvorrichtung gegenüber der Arbeits- und Transportplattform, sodass wenn eine Relativbewegung zwischen den Verfestigungsvorrichtungen und der Arbeits- und Transportplattform für eine Schichtbildung erfolgt, gleichzeitig mit jeder auf die erste Verfestigungsvorrichtung folgenden weiteren Verfestigungsvorrichtung, eine Schicht auf der mittels der jeweils in der Abfolge vorangehenden Verfestigungsvorrichtung gebildeten Schicht gebildet wird.

Es ist somit vorgesehen, dass die Verfestigungsvorrichtungen in einer ringförmigen Abfolge hintereinander angeordnet, wodurch unter Ausnutzung des zur Verfügung stehenden Raums eine Vielzahl von Verfestigungsvorrichtungen angeordnet werden können, wie in der Beschreibung noch näher erläutert ist. Dadurch, dass die Verfestigungsvorrichtungen in einer ringförmigen Abfolge hintereinander angeordnet sind, kann eine große Anzahl von Verfestigungsvorrichtungen auf kleinstem Raum vorgesehen werden. Durch einen stufenweisen Auftrag und die Verfestigung des pulverförmigen Werkstoffs mittels einer solchen, kontinuierlich wirkenden Vorrichtung mit ringförmiger Anordnung der Verfestigungsvorrichtungen sind hohe Bauraten wirtschaftlich erreichbar. Insbesondere ist durch die ringförmige Anordnung der Verfestigungsvorrichtungen die Höhe des möglichen Bauraums nicht mehr abhängig von der Anzahl an notwendigen Verfestigungsvorrichtungen, was die Anlagenkosten erheblich reduziert.

Dabei ist ferner vorgesehen, dass je eine Auftragsvorrichtung mehrerer Auftragsvorrichtungen zum Auftragen des pulverförmigen Werkstoffs und je eine Verfestigungsvorrichtung der mehreren Verfestigungsvorrichtungen zur Verfestigung des Werkstoffs eine Prozesseinheit bilden, wobei eine der mehreren Verfestigungsvorrichtungen in der ringförmigen Abfolge unmittelbar einer der mehreren Auftragsvorrichtungen folgt, wobei die aufeinanderfolgenden Vorrichtungen der Prozesseinheiten in der ringförmigen Abfolge einzeln hintereinander oder in einem Modul zusammengefasst hintereinander angeordnet sind, wobei die in Prozesseinheiten ausgebildeten mehreren Auftragsvorrichtungen und die mehreren Verfestigungsvorrichtungen in der ringförmigen Abfolge, von einem Mittelpunkt eines Kreises ausgehend, auf der Kreislinie mit einem vorgebbaren Kreisumfang radial zu einer durch den Mittelpunkt führenden Y-Achse angeordnet sind, sodass die Prozesseinheiten um den auf Y-Achse liegenden Mittelpunkt gegenüber der Arbeits- und Transportplattform rotieren, wenn für eine Schichtbildung eine Relativbewegung zwischen den Prozesseinheiten und der Arbeits- und Transportplattform erfolgt und jeder Prozesseinheit oder mehreren Prozesseinheiten gemeinsam eine Erwärmungsvorrichtung zugeordnet ist, die von dem Mittelpunkt des Kreises ausgehend auf der Kreislinie mit dem vorgebbaren Kreisumfang radial zu der durch den Mittelpunkt führenden Y-Achse angeordnet ist/sind, sodass die Erwärmungsvorrichtung um den auf Y-Achse liegenden Mittelpunkt gegenüber der Arbeits- und Transportplattform rotiert/rotieren, wenn für eine Schichtbildung eine Relativbewegung zwischen den Prozesseinheiten und der Arbeits- und Transportplattform erfolgt.

Je nachdem wie viele Auftragsvorrichtungen und Verfestigungsvorrichtungen in der Vorrichtung untergebracht werden sollen, kann der Kreisumfang gewählt werden, sodass in Abhängigkeit des vorgegebenen gewählten Kreisumfangs eine unterschiedliche Anzahl von Auftragsvorrichtungen und Verfestigungsvorrichtungen in der Vorrichtung anordbar sind. Erfindungsgemäß ist vorgesehen, die Zuführung des pulverförmigen Werkstoffs zu den Auftragsvorrichtungen der Prozesseinheiten zentral über eine Zuführungsvorrichtung erfolgt, die eine Hauptzuführung und einen Verteiler umfasst, der die mehreren Auftragsvorrichtungen der Prozesseinheiten über dezentrale Teilzuführungen mit dem pulverförmigen Werkstoff versorgt, wobei die Teilzuführungen jeweils entweder mit einem ringförmigen Aufnahmeelement oder mit mehreren Aufnahmeelementen in Verbindung stehen, welches oder welche zumindest die mehreren Auftragsvorrichtungen der Prozesseinheiten halten, wobei die Teilzuführungen gegenüber dem Verteiler und/oder gegenüber den Prozesseinheiten flexibel ausgebildet oder als bewegliche Teilzuführungen ausgebildet sind, wobei das ringförmige Aufnahmeelement oder die mehreren Aufnahmeelemente, die als Prozesseinheiten ausgebildeten mehreren Auftragsvorrichtungen und die mehreren Verfestigungsvorrichtungen halten, wobei dem ringförmigen Aufnahmeelement oder den mehreren Aufnahmeelementen mindestens eine Höhenverstelleinheit zugeordnet ist, die eine Höhenverstellung des oder der Aufnahmeelemente entlang der y-Achse ermöglicht/ermöglichen, wodurch bei der Fertigung des Bauteils zur Schichtbildung eine synchronisierte Relativbewegung zwischen den mehreren Verfestigungsvorrichtungen und den mehreren Auftragsvorrichtungen gegenüber der Arbeits- und Transportplattform erfolgt, wobei das Aufnahmeelement (170) oder die mehreren Aufnahmeelementen als Kragelement/Kragelementen ausgebildet wird/werden, welches die Auftragsvorrichtungen und die Verfestigungsvorrichtungen sowie die Erwärmungsvorrichtung aufnimmt, wobei zwischen der Unterkante des Kragelementes in einer maximalen Höhe und einer Null-Höhe der Arbeits- und Transportplattform ein maximaler Höhenabstand vorliegt, wobei bei diesem maximalen Höhenabstand das mindestens eine Bauteil, in dem zur Herstellung vorgesehenen Bauraum fertiggestellt ist.

In bevorzugter Ausgestaltung der Erfindung ist es vorgesehen, dass die Arbeits- und Transportplattform gegenüber den in der ringförmigen Abfolge hintereinander angeordneten Verfestigungsvorrichtungen absenkbar ist oder dass die in der ringförmigen Abfolge hintereinander angeordneten Verfestigungsvorrichtungen gegenüber der Arbeits- und Transportplattform anhebbar sind. Dadurch wird der Effekt erreicht, dass wenn die durch die letzte Verfestigungsvorrichtung der ringförmigen Abfolge gebildete Schicht gebildet ist, die Arbeits- und Transportplattform gesenkt wird oder die Verfestigungsvorrichtungen angehoben werden und zur weiteren Schichtbildung eine erneute Relativbewegung zwischen den Verfestigungsvorrichtungen und der Arbeits- und Transportplattform erfolgt und beginnend mit der ersten Verfestigungsvorrichtung sowie den folgenden Verfestigungsvorrichtungen eine weitere gleichzeitige Schichtbildung erfolgt. Das heißt, dass dadurch, dass der Abstand zwischen den in der ringförmigen Abfolge hintereinander angeordneten Verfestigungsvorrichtungen und der Arbeits- und Transportplattform variiert werden kann, ein beliebig hohes Bauteil kontinuierlich generativ gefertigt werden kann, ohne dass eine große Anzahl von Verfestigungsvorrichtungen erforderlich ist und ohne dass die Größe der verwendeten Anlage erheblich gesteigert wird.

In weiterer bevorzugter Ausgestaltung der Erfindung ist es vorgesehen, dass derart verfahren wird, dass während der Relativbewegung zwischen den Verfestigungsvorrichtungen und der Arbeits- und Transportplattform für eine Schichtbildung ein Absenken der Arbeits- und Transportplattform gegenüber den in der ringförmigen Abfolge hintereinander angeordneten Verfestigungsvorrichtungen erfolgt oder alternativ oder zusätzlich ein Anheben der in der ringförmigen Abfolge hintereinander angeordneten Verfestigungsvorrichtungen gegenüber der Arbeits- und Transportplattform erfolgt, sodass ein spiralförmiger Schichtaufbau stattfindet. Bei dieser Ausgestaltung ist es besonders vorteilhaft, dass zusätzlich zu den schon genannten Vorteilen ohne irgendeine Unterbrechung ein beliebig hohes Bauteil kontinuierlich generativ gefertigt werden kann.

In einer Ausführungsform ist vorgesehen, dass die Arbeits- und Transportplattform ein endloses in sich geschlossenes Förderband ist, welches in bevorzugter Ausgestaltung analog zu der kreisförmigen Anordnung der Auftragsvorrichtungen und der Verfestigungsvorrichtungen ebenfalls kreisförmig ausgebildet ist. Sobald die Vorrichtung auch die Möglichkeit bietet das gefertigte Bauteil automatisiert aus der Vorrichtung entnehmen zu können, ist eine andere Ausführungsform der Ausgestaltung der Arbeits- und Transportplattform vorgesehen, wie nachfolgend noch erläutert wird.

Die Vorrichtung umfasst in vorteilhafter Weise das ringförmige Aufnahmeelement oder die mehreren Aufnahmeelemente, welches/welche die als Prozesseinheiten ausgebildeten mehreren Auftragsvorrichtungen und die mehreren Verfestigungsvorrichtungen halten, wobei dem ringförmigen Aufnahmeelement oder den mehreren Aufnahmeelementen mindestens eine Höhenverstelleinheit zugeordnet ist, die eine Höhenverstellung des oder der Aufnahmeelemente entlang der Achse ermöglicht/ermöglichen, wodurch bei der Fertigung des Bauteils zur Schichtbildung eine synchronisierte Relativbewegung zwischen den mehreren Verfestigungsvorrichtungen und den mehreren Auftragsvorrichtungen gegenüber der Arbeits- und Transportplattform erfolgt.

Zur Fertigung des Bauteils wird unterhalb der Prozesseinheiten, die in einem Aufnahmeelement oder mehreren Aufnahmeelementen angeordnet sind, ein entsprechender Bauraum benötigt.

In bevorzugter Ausgestaltung der Erfindung, ist unterhalb des ringförmigen Aufnahmeelements oder der mehreren Aufnahmeelemente in Richtung der Achse gesehen, welche die als Prozesseinheiten ausgebildeten mehreren Auftragsvorrichtungen und die Verfestigungsvorrichtungen halten, oberhalb der Arbeits- und Transportplattform - in Richtung der Achse gesehen - ein Bauraum für den pulverförmigen Werkstoff geschaffen, der bei der Schichtbildung der mehreren aufeinander aufbauenden Schichten diskontinuierlich oder kontinuierlich mittels seitlich der Arbeits- und Transportplattform angeordneter reversibel verfahrbarer Bauraumbegrenzungselemente veränderbar ist, wobei die Bauraumbegrenzungselemente in Richtung der Achse verfahrbar und quer zur Arbeits- und Transportplattform angeordnet sind. In vorteilhafter Weise ist somit der Bauraum in flexibler Weise an den Fertigungstand des Bauteils anpassbar. Zu Beginn der Fertigung wird nur ein geringer Bauraum benötigt, sodass die Bauraumbegrenzungselemente nur geringfügig orthogonal zu der Ebene der Arbeits- und Transportplattform hinausstehen. Mit dem Fertigungsfortschritt des Bauteils einhergehend werden die Bauraumbegrenzungselemente je nach Bedarf diskontinuierlich oder kontinuierlich unter Ausbildung eines diskontinuierlich oder kontinuierlich wachsenden Bauraums ausgefahren. Dazu ist den reversibel verfahrbaren Bauraumbegrenzungselementen mindestens eine Höhenverstelleinheit zugeordnet, wie in der Beschreibung näher erläutert ist.

Erfindungsgemäß ist ferner vorgesehen, dass die Vorrichtung den vorangehend beschriebenen ersten Vorrichtungsteil zur Herstellung des mindestens einen Bauteils umfasst, wobei die Vorrichtung ein zweites Vorrichtungsteil zur Entnahme des mindestens einen Bauteils umfasst. Mit anderen Worten, in dem ersten Vorrichtungsteil findet in vorteilhafter Weise die Fertigung statt, während das zweite Vorrichtungsteil die Entnahme des Bauteils, insbesondere außerhalb des ersten Vorrichtungsteils ermöglicht, wie im Beschreibungsteil erläutert ist. Dadurch kann in vorteilhafter Weise der Fertigungsprozess weiter automatisiert und dadurch beschleunigt werden, sodass eine größere Anzahl von Bauteilen pro Zeiteinheit gefertigt werden kann.

Erfindungsgemäß ist vorgesehen, dass in dem zweiten Vorrichtungsteil mehrere Arbeits- und Transportplattformen vorgesehen werden, wobei eine der mehreren Arbeits- und Transportplattformen in dem ersten Vorrichtungsteil und eine andere der mehreren Arbeit- und Transportplattformen in dem zweiten Vorrichtungsteil angeordnet sind, sodass in vorteilhafter Weise parallel eine Fertigung der Bauteile in dem ersten Vorrichtungsteil und eine Entnahme der Bauteile in dem zweiten Vorrichtungsteil möglich ist.

Dazu sind die Arbeits- und Transportplattformen entgegen der oben beschriebenen Ausgestaltung als offene Förderbänder ausgebildet, die in Bewegungsrichtung der Arbeits- und Transportplattformen gegenüberliegende Enden ausbilden, wobei die gegenüberliegenden Enden aufweisenden offenen Förderbänder miteinander in Verbindung stehende Segmente aufweisen, wodurch die Arbeits- und Transportplattformen beweglich für eine Geradeausfahrt beziehungsweise eine Kurvenfahrt geeignet sind. Die detaillierte Ausgestaltung und Anordnung der Arbeits- und Transportplattformen auf einem darunter liegenden Tisch ist in der Beschreibung näher erläutert.

Zudem ist in bevorzugter Ausgestaltung vorgesehen, dass die Vorrichtung nicht nur das erste Vorrichtungsteil zur Herstellung des mindestens einen Bauteils und das zweite Vorrichtungsteil zur Entnahme des mindestens einen Bauteils sowie innerhalb des ersten und/oder zweiten Vorrichtungsteils mindestens eine Reinigungseinheit umfasst, wie in der Beschreibung näher erläutert ist.

Ferner ist ein erfindungsgemäßes Verfahren zur kontinuierlichen generativen Fertigung von dreidimensionalen Bauteilen vorgesehen, die aus mehreren aufeinander aufbauenden Schichten gebildet werden, wobei mehrere Verfestigungsvorrichtungen zur Verfestigung eines aufgetragenen pulverförmigen Werkstoffs in einer Abfolge hintereinander gegenüber einer Arbeits- und Transportplattform angeordnet sind, wobei sich ausgehend von einer ersten Verfestigungsvorrichtung bis zu einer letzten Verfestigungsvorrichtung einer ringförmigen Abfolge der Abstand jeder einzelnen Verfestigungsvorrichtung gegenüber der Arbeits- und Transportplattform vergrößert, wobei für eine Schichtbildung eine Relativbewegung zwischen den Verfestigungsvorrichtungen und der Arbeits- und Transportplattform vorgenommen wird, sodass gleichzeitig mit jeder auf die erste Verfestigungsvorrichtung folgenden weiteren Verfestigungsvorrichtung, eine Schicht auf der mittels der jeweils in der Abfolge vorangehenden Verfestigungsvorrichtung gebildeten Schicht gebildet wird, wobei je eine Auftragsvorrichtung mehrerer Auftragsvorrichtungen zum Auftragen des pulverförmigen Werkstoffs und je eine Verfestigungsvorrichtung der mehreren Verfestigungsvorrichtungen zur Verfestigung des Werkstoffs eine Prozesseinheit bilden, wobei eine der mehreren Verfestigungsvorrichtungen in der ringförmigen Abfolge unmittelbar einer der mehreren Auftragsvorrichtungen folgt, wobei die aufeinanderfolgenden Vorrichtungen der Prozesseinheiten in der ringförmigen Abfolge einzeln hintereinander oder in einem Modul zusammengefasst hintereinander angeordnet sind, wobei die in Prozesseinheiten ausgebildeten mehreren Auftragsvorrichtungen und die mehreren Verfestigungsvorrichtungen in der ringförmigen Abfolge, von einem Mittelpunkt eines Kreises ausgehend, auf der Kreislinie mit einem vorgebbaren Kreisumfang radial zu einer durch den Mittelpunkt führenden Y-Achse angeordnet sind, sodass die Prozesseinheiten um den auf Y-Achse liegenden Mittelpunkt gegenüber der Arbeits- und Transportplattform rotieren, wenn für eine Schichtbildung eine Relativbewegung zwischen den Prozesseinheiten und der Arbeits- und Transportplattform erfolgt, und jeder Prozesseinheit oder mehreren Prozesseinheiten gemeinsam eine Erwärmungsvorrichtung zugeordnet ist, die von dem Mittelpunkt des Kreises ausgehend auf der Kreislinie mit dem vorgebbaren Kreisumfang radial zu der durch den Mittelpunkt führenden Y-Achse angeordnet ist/sind, sodass die Erwärmungsvorrichtung/en um den auf Y-Achse liegenden Mittelpunkt gegenüber der Arbeits- und Transportplattform rotiert/rotieren, wenn für eine Schichtbildung eine Relativbewegung zwischen den Prozesseinheiten und der Arbeits- und Transportplattform erfolgt.

Erfindungsgemäß ist vorgesehen, dass die bei der Fertigung des mindestens einen Bauteils durch die Relativbewegung zwischen den Verfestigungsvorrichtungen und der Arbeits- und Transportplattform erzeugten Schichten durch die mehreren in einer ringförmigen Abfolge hintereinander angeordneten Verfestigungsvorrichtungen gebildet werden, wobei die Zuführung des pulverförmigen Werkstoffs zu den Auftragsvorrichtungen der Prozesseinheiten zentral über eine Zuführungsvorrichtung erfolgt, die eine Hauptzuführung und einen Verteiler umfasst, der die mehreren Auftragsvorrichtungen der Prozesseinheiten über dezentrale Teilzuführungen mit dem pulverförmigen Werkstoff versorgt, wobei die Teilzuführungen jeweils entweder mit einem ringförmigen Aufnahmeelement oder mit mehreren Aufnahmeelementen in Verbindung stehen, welches oder welche zumindest die mehreren Auftragsvorrichtungen der Prozesseinheiten halten, wobei die Teilzuführungen gegenüber dem Verteiler und/oder gegenüber den Prozesseinheiten flexibel ausgebildet oder als bewegliche Teilzuführungen ausgebildet sind, wobei das ringförmige Aufnahmeelement oder die mehreren Aufnahmeelemente, die als Prozesseinheiten ausgebildeten mehreren Auftragsvorrichtungen und die mehreren Verfestigungsvorrichtungen halten, wobei dem ringförmigen Aufnahmeelement oder den mehreren Aufnahmeelementen mindestens eine Höhenverstelleinheit zugeordnet ist, die eine Höhenverstellung des oder der Aufnahmeelemente entlang der y-Achse ermöglicht/ermöglichen, wodurch bei der Fertigung des Bauteils zur Schichtbildung eine synchronisierte überlagerte Relativbewegung aus stetiger Rotation und kontinuierlicher oder diskontinuierlicher Höhenverstellung in dem Abstand zwischen den Prozesseinheiten und der Arbeits- und Transportplattform erfolgt, sodass durch die Relativbewegung zwischen den Prozesseinheiten und der Arbeits- und Transportplattform, bedingt durch die ringförmige Abfolge der einzeln hintereinander oder in einem Modul zusammengefassten hintereinander aufeinanderfolgenden Vorrichtungen der Prozesseinheiten gegenüber der Arbeits- und Transportplattform in einem Durchgang bei einer Drehung der Prozesseinheiten um 360° um den Mittelpunkt gleichzeitig mehrere Schichten ausgebildet werden, wobei die Anzahl der Schichten der Anzahl der in einer ringförmigen Abfolge hintereinander angeordneten Prozesseinheiten entspricht, wobei das Aufnahmeelement oder die mehreren Aufnahmeelementen als Kragelement/Kragelementen ausgebildet wird/werden, welches die Auftragsvorrichtungen und die Verfestigungsvorrichtungen sowie die Erwärmungsvorrichtung aufnimmt, wobei zwischen der Unterkante des Kragelementes in einer maximalen Höhe und einer Null-Höhe der Arbeits- und Transportplattform ein maximaler Höhenabstand vorliegt, wobei bei diesem maximalen Höhenabstand das mindestens eine Bauteil, in dem zur Herstellung vorgesehenen Bauraum fertiggestellt ist.

Das Verfahren ist ferner dadurch gekennzeichnet, dass das mindestens eine Bauteil in einem ersten Vorrichtungsteil gefertigt und nach der Fertigung von dem ersten Vorrichtungsteil in einen zweiten Vorrichtungsteil transportiert und in dem zweiten Vorrichtungsteil manuell und/oder automatisiert entnommen wird. Schließlich ist das Verfahren durch mindestens einen Verfahrensschritt gekennzeichnet, der sich dadurch auszeichnet, dass das mindestens eine Bauteil vor der Entnahme aus dem zweiten Vorrichtungsteil automatisiert gereinigt werden kann. Die Entnahmemöglichkeit und die Reinigungsmöglichkeit durch die entsprechende Ausgestaltung der Vorrichtung komplettiert das Verfahren zur kontinuierlichen generativen Fertigung von Bauteilen in vorteilhafter Weise. Weitere bevorzugte Ausgestaltungen der Erfindung ergeben sich aus den übrigen, in den Unteransprüchen genannten Merkmalen.

Die Erfindung wird nachfolgend in Ausführungsbeispielen anhand der zugehörigen Zeichnungen erläutert. Es zeigen:
- Figur 1: eine schematische Darstellung einer Prozesseinheit,
- Figur 2: eine schematische Darstellung des allgemeinen Aufbaus der erfindungsgemäßen Vorrichtung,
- Figur 3: eine schematische Darstellung des speziellen Aufbaus der erfindungsgemäßen Vorrichtung,
- Figur 4: eine weitere schematische Darstellung des speziellen Aufbaus der erfindungsgemäßen Vorrichtung,
- Figur 5: eine schematische Darstellung der Herstellung eines Bauteils mittels der erfindungsgemäßen Vorrichtung und des erfindungsgemäßen Verfahrens gemäß einer ersten Ausführung,
- Figur 6: eine schematische Darstellung der Herstellung eines Bauteils mittels der erfindungsgemäßen Vorrichtung und des erfindungsgemäßen Verfahrens gemäß einer weiteren Ausführung,
- Figur 7: eine Draufsicht auf ein erstes Vorrichtungsteil der erfindungsgemäßen Vorrichtung in dem das Bauteil hergestellt wird,
- Figur 8: einen Schnitt A-A gemäß Figur 7 auf das erste Vorrichtungsteil der erfindungsgemäßen Vorrichtung in dem das Bauteil hergestellt wird,
- Figur 9: eine Draufsicht auf ein zweites Vorrichtungsteil zur Entnahme des Bauteils und ein drittes Vorrichtungsteil zur Reinigung der Vorrichtungskomponenten der erfindungsgemäßen Vorrichtung in einer Ausgangsposition, und
- Figur 10: eine Draufsicht auf das zweite Vorrichtungsteil zur Entnahme des Bauteils und das dritte Vorrichtungsteil zur Reinigung der Vorrichtungskomponenten der erfindungsgemäßen Vorrichtung in einer Zwischenposition.

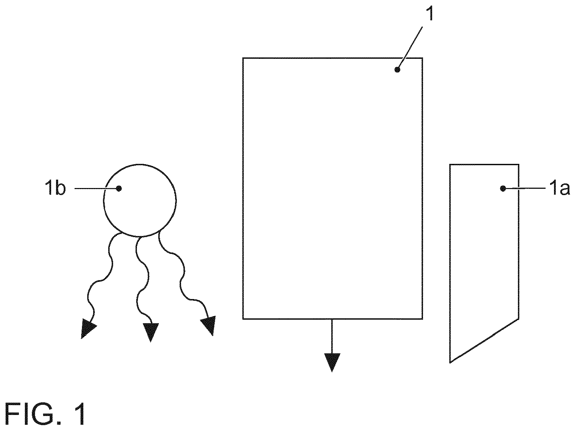

Figur 1 zeigt zunächst eine bekannte Verfestigungsvorrichtung 1, auch als Druckkopf oder Druckmittel bezeichnet. Mit der Verfestigungsvorrichtung 1 erfolgt beispielsweise ein Auftragen eines Binders, das heißt eines Mittels zur chemischen Verfestigung eines Werkstoffs, oder die Abgabe einer energiereichen Strahlung zum Aufschmelzen des Werkstoffs beziehungsweise zur thermischen Verfestigung des Werkstoffs, der nach dem Aufschmelzen erstarrt.

Zum Auftragen eines Pulvers beziehungsweise eines pulver- oder partikelförmigen Werkstoffs ist der Verfestigungsvorrichtung 1 eine Auftragsvorrichtung 1a zugeordnet, insbesondere bilden die Verfestigungsvorrichtung 1 und die Auftragsvorrichtung 1a eine Prozesseinheit.

Mindestens eine Verfestigungsvorrichtung 1 und mindestens eine Auftragsvorrichtung 1a werden zur Herstellung des dreidimensionalen Bauteils B benötigt, wobei die Auftragsvorrichtung 1a zur Herstellung des dreidimensionalen Bauteils B der Verfestigungsvorrichtung 1 bezüglich des Verfahrensschrittes Auftragen des pulver- oder partikelförmigen Werkstoffs dem Verfahrensschritt Verfestigen des pulver- oder partikelförmigen Werkstoffs vorangeht.

Hinsichtlich der Anordnung kann eine Auftragsvorrichtung 1a und eine Verfestigungsvorrichtung 1 als Prozesseinheit separat ausgebildet werden oder eine Auftragsvorrichtung 1a und eine Verfestigungsvorrichtung 1 bilden ein Modul, das heißt sie sind gemeinsam modular in einem Bauteil angeordnet.

Mit anderen Worten, es können auch mehrere Verfestigungsvorrichtungen 1, 1', 1" und mehrere zugeordnete Auftragsvorrichtung 1a, 1a`, 1a" in separater Anordnung oder in einer modularen Anordnung zur Herstellung des dreidimensionalen Bauteils B eingesetzt werden, wobei die Auftragsvorrichtung 1a zur Herstellung des dreidimensionalen Bauteils B der Verfestigungsvorrichtung 1 bezüglich des Verfahrensschrittes Auftragen des pulver- oder partikelförmigen Werkstoffs dem Verfahrensschritt Verfestigen des pulver- oder partikelförmigen Werkstoffs unabhängig von der separaten oder modularen Anordnung vorangeht.

Als pulver- oder partikelförmiger Werkstoff wird insbesondere Metall- oder Kunststoffpulver oder ein Sand verwendet.

Der Verfestigungsvorrichtung 1 und der Auftragsvorrichtung 1a beziehungsweise der Prozesseinheit ist eine Erwärmungsvorrichtung 1b zugeordnet, so wie allgemein bekannt ist. Mehreren Verfestigungsvorrichtungen 1, 1', 1" und mehreren Auftragsvorrichtungen 1a, 1a', 1a" kann mindestens eine Erwärmungsvorrichtung 1b zugeordnet sein, wobei je einer Verfestigungsvorrichtung 1, 1', 1" und je einer Auftragsvorrichtung 1a, 1a', 1a" eine Erwärmungsvorrichtung 1b oder mehreren Verfestigungsvorrichtungen 1, 1', 1" und mehreren Auftragsvorrichtungen 1a, 1a`, 1a" mindestens eine oder mehr als eine Erwärmungsvorrichtung 1b zugeordnet werden kann. Bezüglich des Verfahrensschrittes Erwärmen des zuvor aufgetragenen und verfestigten pulver- oder partikelförmigen Werkstoffs unter Ausbildung des dreidimensionalen Bauteils B schließt sich der Verfahrensschritt Erwärmen mittels der Erwärmungsvorrichtung 1b an diese Verfahrensschritte an. Es können mehrere Bauteile B durch Auftragen und Verfestigten pulver- oder partikelförmigen Werkstoffs hergestellt werden, die anschließend mittels einer einzigen Erwärmungsvorrichtung 1b in dem Verfahrensschritt Erwärmen ohne eine Veränderung der dreidimensionalen Form fertiggestellt werden.

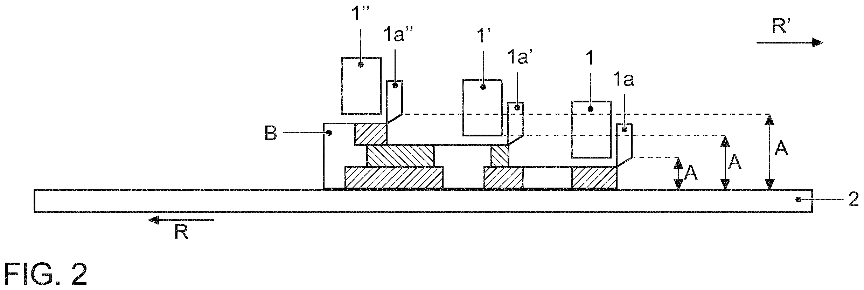

Wie in Figur 2 gezeigt, sind zur kontinuierlichen generativen Fertigung von Bauteilen B, die aus mehreren aufeinander aufbauenden Schichten gebildet werden, mehrere Verfestigungsvorrichtungen 1, 1', 1", einschließlich der zugehörigen Auftragsvorrichtungen 1a, 1a', 1a", zur Verfestigung eines aufgetragenen Pulvers in einer Abfolge hintereinander gegenüber einer Arbeits- und Transportplattform 2 angeordnet.

In Figur 2 wird zunächst verdeutlicht, dass sich der Abstand A jeder einzelnen Verfestigungsvorrichtung 1, 1', 1" ausgehend von einer ersten Verfestigungsvorrichtung 1 bis zu einer letzten Verfestigungsvorrichtung 1" der Abfolge gegenüber der Arbeits- und Transportplattform 2 vergrößert. Wie zu erkennen ist, betrifft das auch die zugehörige Auftragsvorrichtung 1a, 1a', 1a". Ausgehend von einer ersten Auftragsvorrichtung 1a bis zu einer letzten Auftragsvorrichtung 1a" der Abfolge vergrößert sich der Abstand (in Figur 2 ohne Bezugszeichen) gegenüber der Arbeits- und Transportplattform 2.

Mit anderen Worten, die Verfestigungsvorrichtung 1, 1', 1" und die jeweils zugeordnete zugehörige Auftragsvorrichtung 1a, 1a`, 1a" sind in mindestens einem oder mehreren Aufnahmeelement/en 170 in der Abfolge hintereinander gegenüber der Arbeits- und Transportplattform 2 in unterschiedlichen Abständen A angeordnet, wie noch weiter erläutert wird.

Zum Vorschub, das heißt für eine Schichtbildung erfolgt eine Relativbewegung zwischen den Verfestigungsvorrichtungen 1, 1', 1" und der Arbeits- und Transportplattform 2 ausgehend von der ersten Verfestigungsvorrichtung 1 zu der letzten Verfestigungsvorrichtung 1". Bevorzugt erfolgt dadurch eine solche Relativbewegung, dass sich die Arbeits- und Transportplattform 2 in Richtung R, also in Richtung der letzten Verfestigungsvorrichtung 1" bewegt, ausgehend von der ersten Verfestigungsvorrichtung 1, wobei die Verfestigungsvorrichtungen 1, 1', 1" stillstehen. Natürlich kann eine solche Relativbewegung für einen Schichtaufbau auch dadurch erfolgen, dass sich die Verfestigungsvorrichtungen 1, 1', 1" in entgegengesetzter Richtung R', bewegen, wobei die Arbeits- und Transportplattform 2 stillsteht. Denkbar ist es auch, dass sich zu diesem Zweck sowohl die Verfestigungsvorrichtungen 1, 1', 1" in Richtung R` bewegen als auch die Arbeits- und Transportplattform 2 in Richtung R bewegt, also sich die Verfestigungsvorrichtungen 1, 1', 1" und die Arbeits- und Transportplattform 2 gegenläufig zueinander bewegen. Jedenfalls wird gleichzeitig mit jeder auf die erste Verfestigungsvorrichtung 1 folgenden Verfestigungsvorrichtung 1', 1" eine Schicht auf der mittels der jeweils in der Abfolge vorangehenden Verfestigungsvorrichtung 1, 1', 1" gebildeten Schicht gebildet.

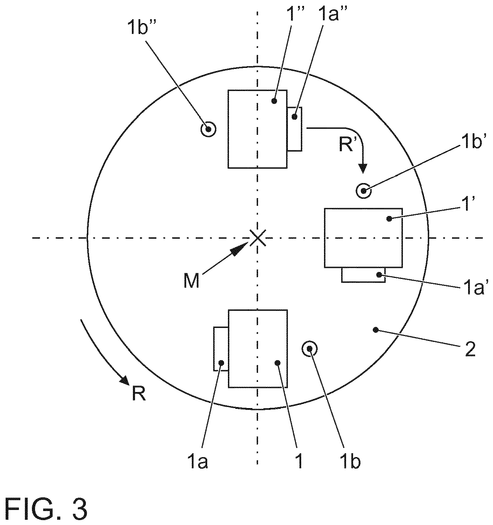

Wie in Figur 3 gezeigt, sind die Verfestigungsvorrichtungen 1, 1', 1", insbesondere einschließlich der zugehörigen Auftragsvorrichtungen 1a, 1a`, 1a", erfindungsgemäß in einer ringförmigen Abfolge hintereinander angeordnet. Beispielsweise sind die Verfestigungsvorrichtungen 1, 1', 1" in einer ringförmigen Abfolge derart hintereinander angeordnet, dass die Verfestigungsvorrichtungen 1, 1', 1" auf einem Kreis radial angeordnet sind. Die Verfestigungsvorrichtungen 1, 1', 1" sind über beziehungsweise gegenüber der Arbeits- und Transportplattform 2 angeordnet. Die Arbeits- und Transportplattform 2 ist beispielsweise kreisförmig. Zum Vorschub, das heißt zum Schichtaufbau erfolgt eine Relativbewegung zwischen den Verfestigungsvorrichtungen 1, 1', 1" und der Arbeits- und Transportplattform 2 dadurch, dass die Arbeits- und Transportplattform 2 gegenüber den Verfestigungsvorrichtungen 1, 1', 1" rotiert und zwar in Richtung R, also in Richtung der letzten Verfestigungsvorrichtung 1", ausgehend von der ersten Verfestigungsvorrichtung 1. Eine Relativbewegung zwischen den Verfestigungsvorrichtungen 1, 1', 1" und der Arbeits- und Transportplattform 2 für einen Schichtaufbau kann auch dadurch erfolgen, dass die Verfestigungsvorrichtungen 1, 1', 1" gegenüber der Arbeits- und Transportplattform 2 in entgegengesetzter Richtung R' rotieren, wobei die Arbeits- und Transportplattform 2 stillsteht. Denkbar ist es auch, dass sich zu diesem Zweck sowohl die Verfestigungsvorrichtungen 1, 1`, 1" in Richtung R' bewegen als auch sich die Arbeits- und Transportplattform 2 in Richtung R bewegt, also sich die Verfestigungsvorrichtungen 1, 1', 1" und die Arbeits- und Transportplattform 2 gegenläufig zueinander bewegen beziehungsweise gegenläufig rotieren. Die Arbeits- und Transportplattform 2 kann beispielsweise ein endloses in sich geschlossenes Förderband sein oder einfach nur eine Platte, insbesondere eine kreisförmige Platte. Die Verfestigungsvorrichtungen 1, 1', 1" können auch in einer ringförmigen Abfolge derart hintereinander angeordnet sein, dass die Verfestigungsvorrichtungen 1, 1', 1" auf einem Oval beziehungsweise entlang eines gedachten in sich geschlossenen Linienzugs, der sich aus geraden Stücken und Kreisbögen zusammensetzt, radial angeordnet sind. Dementsprechend ist die Arbeits- und Transportplattform 2 dann ein endloses in sich geschlossenes Förderband beziehungsweise Gliederband, das sich ebenfalls entlang eines gedachten in sich geschlossenen Linienzugs erstreckt, der sich aus geraden Stücken und Kreisbögen zusammensetzt.

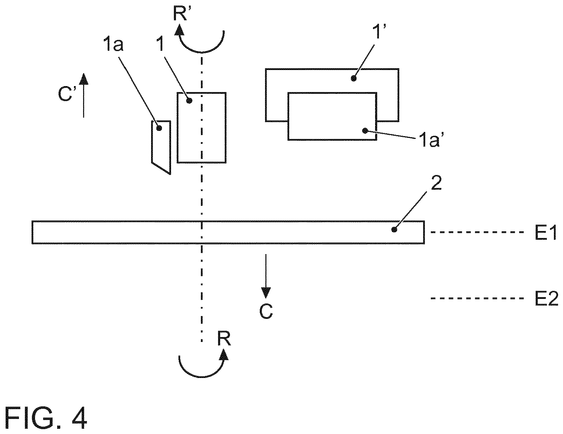

Wie in Figur 4 gezeigt, ist die Arbeits- und Transportplattform 2 erfindungsgemäß gegenüber den in der ringförmigen Abfolge hintereinander angeordneten Verfestigungsvorrichtungen 1, 1', 1", beziehungsweise gegenüber den zu den Verfestigungsvorrichtungen 1, 1', 1" zugehörigen Auftragsvorrichtungen 1a, 1a', 1a", absenkbar in Richtung C. In Figur 4 sind die letzte Verfestigungsvorrichtung 1" und die zugehörige Auftragsvorrichtung 1a" zum Zweck einer besseren Übersichtlichkeit nicht gezeigt. Erfindungsgemäß sind die in der ringförmigen Abfolge hintereinander angeordneten Verfestigungsvorrichtungen 1, 1', 1", einschließlich der zugehörigen Auftragsvorrichtungen 1a, 1a`, 1a", alternativ oder zusätzlich, gegenüber der Arbeits- und Transportplattform 2 anhebbar in Richtung C'. Dadurch, dass die Arbeits- und Transportplattform 2 gegenüber den in der ringförmigen Abfolge hintereinander angeordneten Verfestigungsvorrichtungen 1, 1', 1" in Richtung C absenkbar ist oder alternativ oder zusätzlich dazu die in der ringförmigen Abfolge hintereinander angeordneten Verfestigungsvorrichtungen 1, 1', 1" gegenüber der Arbeits- und Transportplattform 2 anhebbar in Richtung C` sind, kann dann, wenn eine erste Relativbewegung für eine Schichtbildung zwischen den Verfestigungsvorrichtungen 1, 1', 1" und der Arbeits- und Transportplattform 2 in einer ersten Abstandsebene E1 zwischen den Verfestigungsvorrichtungen 1, 1', 1" und der Arbeits- und Transportplattform 2 erfolgt ist und die durch die letzte Verfestigungsvorrichtung 1" der ringförmigen Abfolge gebildete Schicht gebildet ist, die Arbeits- und Transportplattform 2 gesenkt werden oder es können die Verfestigungsvorrichtungen 1, 1', 1" alternativ oder zusätzlich angehoben werden und es erfolgt zur weiteren Schichtbildung eine erneute Relativbewegung zwischen den Verfestigungsvorrichtungen 1, 1', 1" und der Arbeits- und Transportplattform 2 in einer Richtung R ausgehend von der ersten Verfestigungsvorrichtung 1 zu der letzten Verfestigungsvorrichtung 1" in einer zweiten Abstandsebene E2 zwischen den Verfestigungsvorrichtungen 1, 1', 1" und der Arbeits- und Transportplattform 2, das heißt beginnend mit der ersten Verfestigungsvorrichtung 1 sowie den folgenden Verfestigungsvorrichtungen 1', 1" erfolgt dann eine weitere Schichtbildung.

Zusammengefasst erfolgt in einem ersten Durchgang I, also einer ersten Relativbewegung zwischen den Verfestigungsvorrichtungen 1, 1', 1" und der Arbeits- und Transportplattform 2 in einer ersten Abstandsebene E1 zwischen den Verfestigungsvorrichtungen 1, 1', 1" und der Arbeits- und Transportplattform 2, die Bildung einer ersten Schicht mittels der ersten Verfestigungsvorrichtung 1 in Verbindung mit der zugehörigen Auftragsvorrichtung 1a sowie die Bildung einer zweiten Schicht mittels der zweiten Verfestigungsvorrichtung 1' in Verbindung mit der zugehörigen Auftragsvorrichtung 1a' auf der ersten Schicht sowie die Bildung einer dritten Schicht mittels der letzten Verfestigungsvorrichtung 1" in Verbindung mit der zugehörigen Auftragsvorrichtung 1a".

Es werden also bei einer ersten Relativbewegung zwischen den Verfestigungsvorrichtungen 1, 1', 1" und der Arbeits- und Transportplattform 2, bedingt durch die ringförmige Abfolge hintereinander angeordneter Verfestigungsvorrichtungen 1, 1', 1" gegenüber der Arbeits- und Transportplattform 2, in einem Durchgang I, das heißt insbesondere einer Drehung um 360 gleichzeitig mehrere Schichten gebildet, wobei die Anzahl der Schichten der Anzahl der in einer ringförmigen Abfolge hintereinander angeordneten Verfestigungsvorrichtungen 1, 1', 1" entspricht. Erfindungsgemäß kann eine große Anzahl von Verfestigungsvorrichtungen 1, 1', 1" auf kleinstem Raum vorgesehen werden, da diese in einer ringförmigen Abfolge hintereinander angeordnet sind.

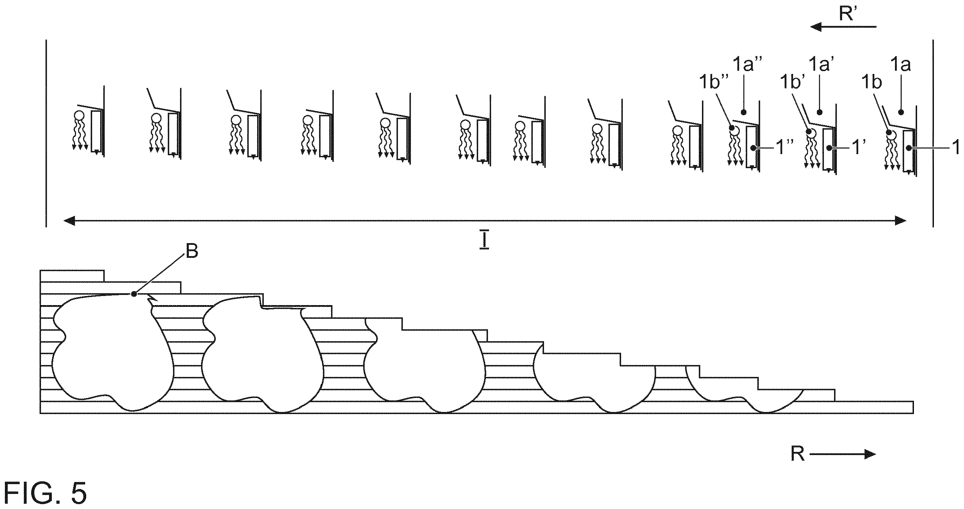

Angenommen es sind zwölf Verfestigungsvorrichtungen 1 in einer ringförmigen Abfolge hintereinander angeordnet, dann können, wie in Figur 5 gezeigt, in einem Durchgang I beziehungsweise einer vollständigen, also in sich geschlossenen Relativbewegung der Arbeits- und Transportplattform 2 gegenüber den zwölf Verfestigungsvorrichtungen 1 in einer ersten Abstandsebene E1 zwischen den Verfestigungsvorrichtungen 1, 1', 1" usw. und der Arbeits- und Transportplattform 2 oder einer vollständigen Relativbewegung der zwölf Verfestigungsvorrichtungen 1, 1', 1" usw. gegenüber der Arbeits- und Transportplattform 2 in einer ersten Abstandsebene E1 zwischen den Verfestigungsvorrichtungen 1, 1', 1" usw. und der Arbeits- und Transportplattform 2 gleichzeitig zwölf Schichten aufeinander aufgebaut werden, sodass ein vollständiges Bauteil B kontinuierlich generativ gefertigt wird.

Angenommen das zu fertigende Bauteil B ist aus mehr als zwölf Schichten aufgebaut, dann erfolgt wie beschrieben in dem Moment ein Absenken der Arbeits- und Transportplattform 2 gegenüber den zwölf Verfestigungsvorrichtungen 1, 1', 1" usw. oder alternativ oder zusätzlich ein Anheben der zwölf Verfestigungsvorrichtungen 1, 1', 1" usw. gegenüber der Arbeits- und Transportplattform 2, wenn die zwölfte Schicht im ersten Durchgang I gebildet ist und die aufeinander aufgebauten zwölf Schichten wieder an der ersten Verfestigungsvorrichtung 1 der zwölf Verfestigungsvorrichtungen 1, 1', 1" usw. angelangt sind, sodass bei einer weiteren Relativbewegung zwischen den Verfestigungsvorrichtungen 1, 1', 1" usw. und der Arbeits- und Transportplattform 2 in einer zweiten Abstandsebene E2 zwischen den Verfestigungsvorrichtungen 1, 1', 1" usw. und der Arbeits- und Transportplattform 2 mindestens mittels der ersten Verfestigungsvorrichtung 1, 1', 1" usw. auf die zwölfte Schicht mindestens eine weitere Schicht aufgebracht wird und beispielsweise mittels der auf die erste Verfestigungsvorrichtung 1 folgenden Verfestigungsvorrichtungen 1' erneut mindestens eine weitere Schicht auf die mittels der vorangegangenen Verfestigungsvorrichtung 1 gebildete Schicht aufgebracht wird.

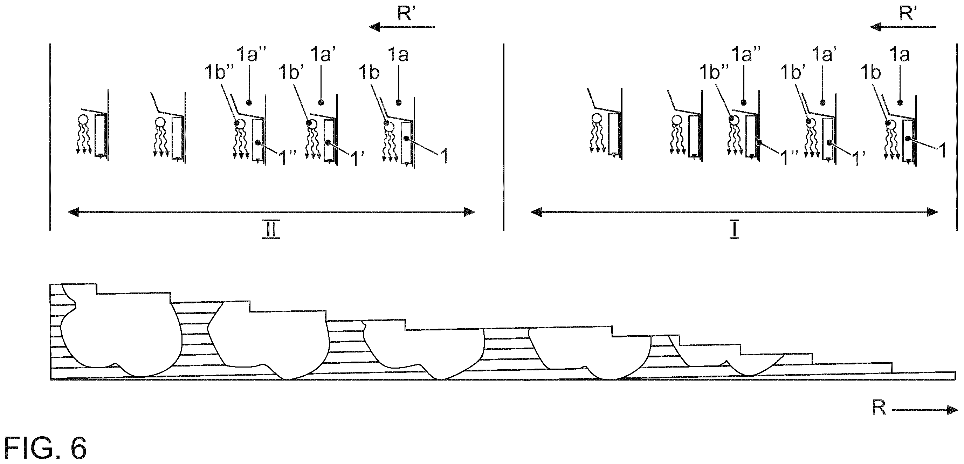

Wie in Figur 6 gezeigt, kann dadurch, dass die Arbeits- und Transportplattform 2 gegenüber den in der ringförmigen Abfolge hintereinander angeordneten Verfestigungsvorrichtungen 1, 1', 1" absenkbar ist und/oder dass die in der ringförmigen Abfolge hintereinander angeordneten Verfestigungsvorrichtungen 1, 1', 1" gegenüber der Arbeits- und Transportplattform 2 anhebbar sind, während der Relativbewegung zwischen den Verfestigungsvorrichtungen 1, 1', 1" und der Arbeits- und Transportplattform 2 zum Vorschub, das heißt zum gleichzeitigen Aufbau beziehungsweise zur gleichzeitigen Bildung mehrerer Schichten aufeinander, ein Absenken der Arbeits- und Transportplattform 2 gegenüber den in der ringförmigen Abfolge hintereinander angeordneten Verfestigungsvorrichtungen 1, 1', 1" erfolgen oder ein Anheben der in der ringförmigen Abfolge hintereinander angeordneten Verfestigungsvorrichtungen 1, 1', 1" gegenüber der Arbeits- und Transportplattform 2 erfolgen oder gleichzeitig sowohl ein Absenken der Arbeits- und Transportplattform 2 gegenüber den Verfestigungsvorrichtungen 1, 1', 1", als auch ein Abheben der Verfestigungsvorrichtungen 1, 1', 1" gegenüber der Arbeits- und Transportplattform 2 erfolgen, sodass ein gleichzeitiger spiralförmiger Aufbau von Schichten erfolgt beziehungsweise gleichzeitig mehrere Schichten spiralförmig aufeinander gebildet werden.

Wie gemäß Figur 6 gezeigt, sind fünf Verfestigungsvorrichtungen 1, 1', 1" usw. in einer ringförmigen Abfolge hintereinander angeordnet. So können in einem ersten Durchgang I, also einer ersten in sich geschlossenen Relativbewegung zwischen den Verfestigungsvorrichtungen 1, 1', 1" usw. und der Arbeits- und Transportplattform 2 zur Schichtbildung, spiralförmig die ersten fünf Schichten aufeinander gebildet werden und in einem zweiten Durchgang II, ohne Unterbrechung, weitere fünf Schichten aufeinander gebildet werden.

Mit anderen Worten erfolgt gemäß dieser Ausführung gegenüber der vorher beschriebenen Ausführung kein stufenweiser Wechsel von einer ersten Abstandsebene E1 zwischen den Verfestigungsvorrichtungen 1, 1', 1" und der Arbeits- und Transportplattform 2 zu einerzweiten Abstandsebene E2 zwischen den Verfestigungsvorrichtungen 1, 1', 1" und der Arbeits- und Transportplattform 2, sondern ein kontinuierlicher Wechsel von einer ersten Abstandsebene E1 zu einer zweiten Abstandsebene E2 beziehungsweise einer beliebigen weiteren Abstandsebene En. Fertiggestellte Bauteile werden bevorzugt seitlich von der Arbeits- und Transportplattform 2 entnommen.

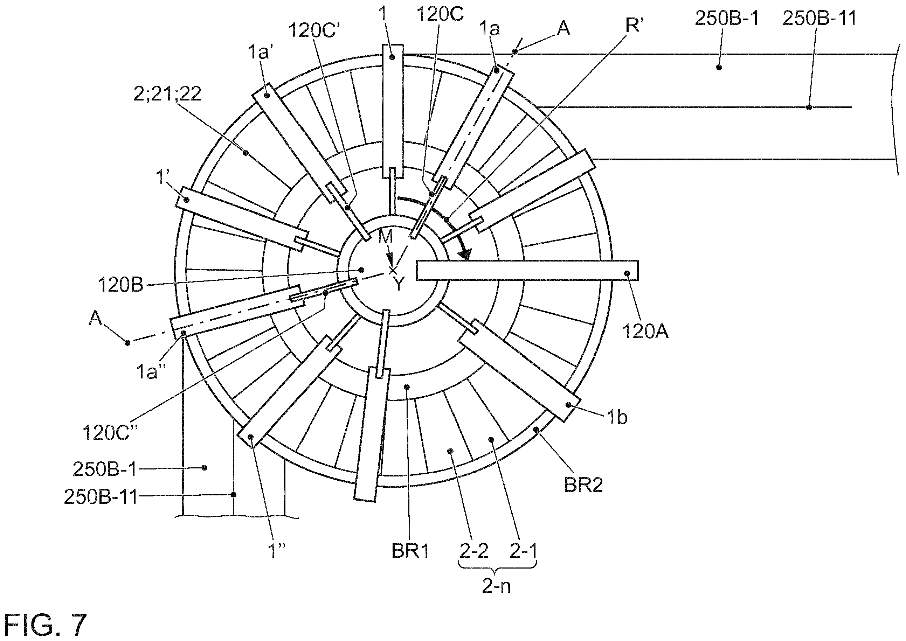

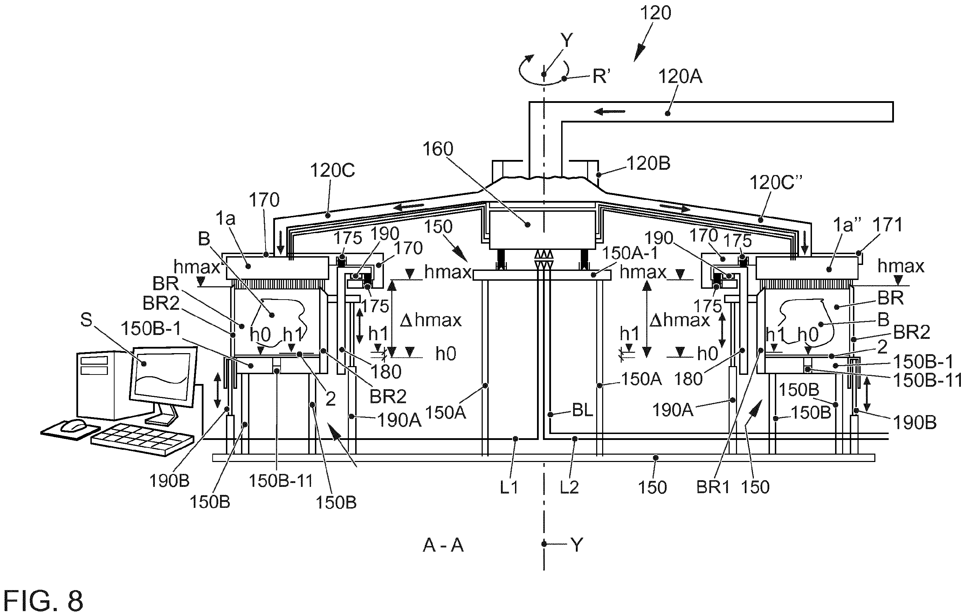

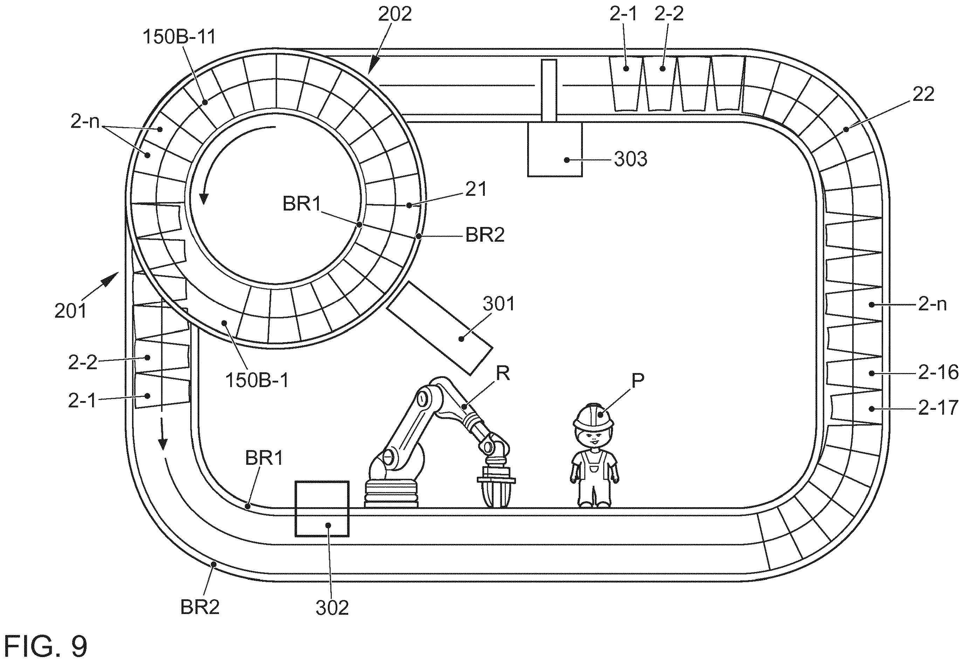

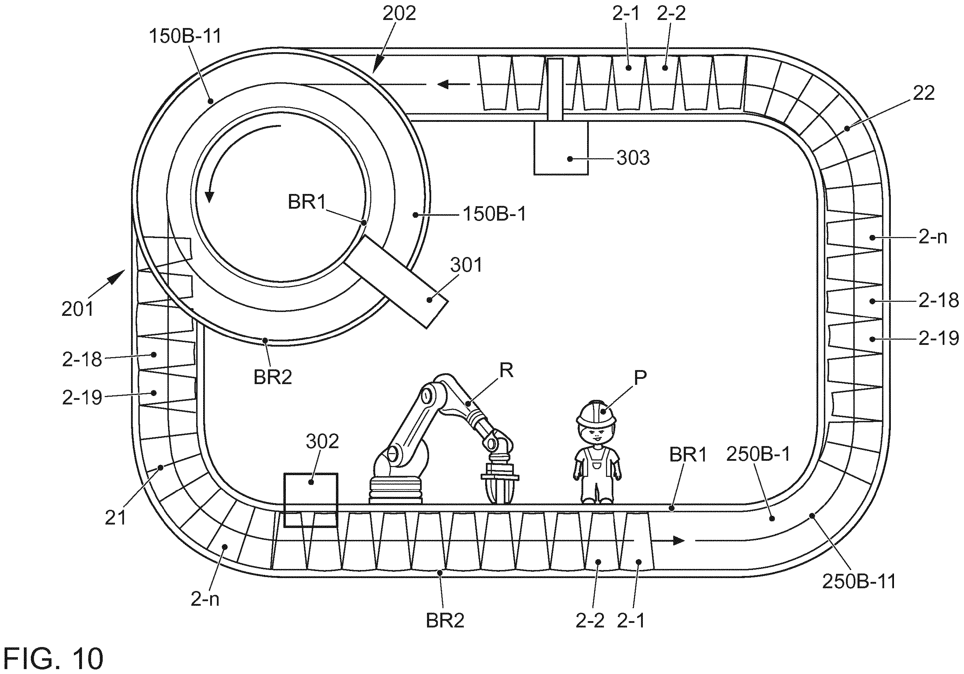

Nachfolgend wird eine praxisnahe Ausführungsform der Vorrichtung (vergleiche Figuren 7 und 8) erläutert, die sowohl mindestens eine Verfestigungsvorrichtung 1, mindestens eine Auftragsvorrichtung 1a und mindestens eine Erwärmungsvorrichtung 1b sowie eine Entnahmevorrichtung R (vergleiche Figuren 9 und 10) und mindestens eine Reinigungsvorrichtung (vergleiche Figuren 9 und 10) umfasst.

Die Ausführungsform wird anhand einer Konfiguration erläutert, bei der die mindestens eine Verfestigungsvorrichtung 1, die mindestens eine Auftragsvorrichtung 1a und die mindestens eine Erwärmungsvorrichtung 1b bei der Herstellung des Bauteils B gegenüber der Arbeits- und Transportplattform 2 rotieren. In der nachfolgend vorgestellten Konfiguration ist die mindestens eine Verfestigungsvorrichtung 1, die mindestens eine Auftragsvorrichtung 1a und die mindestens eine Erwärmungsvorrichtung 1b auf einer Kreisbahn liegend gegenüber einem Mittelpunkt M der kreisförmigen Arbeits- und Transportplattform 2 in einem vorgebbaren Abstand beabstandet angeordnet und gegenüber dem Mittelpunkt M radial ausgerichtet, wie anhand der Figur 8 ersichtlich ist, wobei nachfolgend auf die Figur 7 detailliert eingegangen wird.

Figur 7 zeigt eine vereinfachte Draufsicht auf das erste Vorrichtungsteil der Vorrichtung.

Es wird empfohlen den Erläuterungen in Zusammenschau mit der Figur 8 zu folgen, die einen Schnitt A-A durch das erste Vorrichtungsteil der Vorrichtung zeigt, dessen Schnittlinie in Figur 7 eingezeichnet ist. In dem Schnitt der Figur 8 ist zusätzlich zu der Schnittlinie A-A gemäß Figur 7 als Beispiel für eine das Verfestigungsmaterial zuführende Vorrichtung 120 eine Sandzuführungsvorrichtung ebenfalls als Schnitt dargestellt.

Die Sandzuführungsvorrichtung 120 (vergleiche Figur 8) umfasst eine Hauptzuführung 120A, die einem Verteiler 120B Sand zuführt, der dort kontinuierlich zur Abgabe in Teilzuführungen 120C, 120C`, 120C" bevorratet wird.

Der Sand kann (vergleiche Figur 7) von dem Verteiler 120B mindestens einer Auftragsvorrichtung 1a über mindestens eine Teilzuführung 120C zugeführt werden.

Im Ausführungsbeispiel sind vier Auftragsvorrichtungen dargestellt, wobei in den Figuren 7 und 8 analog zu der vorhergehenden Beschreibung drei Auftragsvorrichtungen 1a, 1a`, 1a" und drei Teilzuführungen 120C, 120C`, 120C" mit entsprechenden Bezugszeichen versehen sind.

In Figur 8 sind somit zwei Auftragsvorrichtungen 1a, 1a" und zwei Teilzuführungen 120C, 120C" sichtbar. Der Verteiler 120B ist oberhalb der Auftragsvorrichtungen 1a, 1a`, 1a" angeordnet, sodass der Sand frei in Abhängigkeit der Schwerkraft und/oder durch nicht dargestellte vorzusehende unterstützende Mittel zu den Auftragsvorrichtungen 1a, 1a', 1a" kontinuierlich oder diskontinuierlich fließen kann. Dazu ist der Verteiler 120B in der dargestellt Ausführungsform auf einem ortsfesten Tisch einer ersten Stützkonstruktion 150A einer Unterkonstruktion 150 über ein in der Ausführungsform dargestelltes Schienen-Rollen-System gegenüber dem Tisch 150A-1 drehbar angeordnet. Auf dem Tisch 150A-1 (vergleiche Figur 8) ist ein Versorgungs- und Verteilungsmodul 160 für die benötigten Medien angeordnet, worauf noch eingegangen wird. Der Verteiler 120B ist in der Ausführungsform oberhalb des Versorgungs- und Verteilungsmoduls 160 angeordnet.

Wie die Figur 7 verdeutlicht, sind die Auftragsvorrichtungen 1a, 1a`, 1a" in der gewählten Ausführungsform separat ausgebildet und bilden hier, anders als eingangs beschrieben, mit den angeordneten Verfestigungsvorrichtungen 1, 1', 1" kein Modul. Eine modulare Anordnung und Ausgestaltung ist jedoch möglich. Den Auftragsvorrichtungen 1a, 1a`, 1a" und den Verfestigungsvorrichtungen 1, 1', 1" sind in dieser Ausführungsform im Unterschied zu der vorhergehenden Beschreibung nur eine einzige Erwärmungsvorrichtung 1b zugeordnet, worauf ebenfalls noch näher eingegangen wird.

Die Fertigung des Bauteils B findet gemäß der Ausführungsform wie bisher beschrieben durch Rotation der Auftragsvorrichtungen 1a, 1a', 1a" und der Verfestigungsvorrichtungen 1, 1', 1" gegenüber der Arbeits- und Transportplattform 2 statt, wobei der Herstellungsprozess des Bauteils B stets mit einer Auftragsvorrichtung 1a beginnt, an die sich eine Verfestigungsvorrichtung 1 unter Bildung einer Schicht anschließt, wobei zur Ausbildung der weiteren Schichten die anderen Auftrags- und Verfestigungsvorrichtungen 1a' und 1' sowie 1a" und 1" usw. folgen. Als Rotationsrichtung ist zur weiteren Beschreibung gemäß Figur 7 beispielsweise die Richtung R' in Uhrzeigerrichtung festgelegt.

In der gewählten Ausführungsform ist die Arbeits- und Transportplattform 2 zu der Herstellung des Bauteils B weder höhenverstellbar noch rotiert die Arbeits- und Transportplattform 2 um den Mittelpunkt M.

Die verschiedenen Möglichkeiten zur Höhenverstellung stufenweiser Wechsel von Abstandsebene E1 zur Abstandsebene E2 (Figur 5) oder kontinuierlicher Übergang von Abstandsebene E1 zur Abstandsebene E2 (Figur 6) wurden im Zusammenhang mit der Beschreibung der Figuren 5 und 6 bereits erläutert und werden in der beschriebenen Ausführungsform durch eine Höhenverstellung eines rotierenden Aufnahmeelementes 170 insbesondere eines Kragelementes realisiert, wie nachfolgend erläutert wird.

Das bausteife Kragelement 170 wird von einem höhenverstellbaren Stützglied 180 gehalten. Das Kragelement 170 kragt in Richtung eines unterhalb des Kragelementes 70 gebildeten Bauraums BR zur Herstellung des Bauteils B aus.

Während der Herstellung des Bauteils B erfolgt mittels des Kragelementes 170 eine um eine vertikale Achse Y (vergleiche Figuren 7 und 8) stattfindende rotierende Relativbewegung der Auftragsvorrichtungen 1a, 1a', 1a" und der Verfestigungsvorrichtungen 1, 1', 1" sowie der Erwärmungsvorrichtung 1b und des Verteilers 120B sowie der Teilzuführungen 120C, 120C`, 120" gegenüber Arbeits- und Transportplattform 2. Die Hauptzuführung 120A des Verfestigungsmaterials, hier des Sandes, zu den Teilzuführungen 120C, 120C`, 120" ist oberhalb des Verteilers 120B angeordnet, und von den Teilzuführungen 120C, 120C`, 120" entkoppelt, sodass die Hauptzuführung 120A nicht rotiert.

Der Verteiler 120B kann auf dem ortsfesten Tisch der ersten Stützkonstruktion 150A der Unterkonstruktion 150 rotieren, ist jedoch nicht höhenverstellbar, wie Figur 8 verdeutlicht.

Das Kragelement 170 kann als ringförmiges Element ausgebildet sein oder es sind mehrere Kragelemente getrennt voneinander ausgebildet, welche jeweils die Auftragsvorrichtungen 1a, 1a`, 1a" und jeweils die Verfestigungsvorrichtungen 1, 1', 1" sowie die Erwärmungsvorrichtung 1b über der Arbeits- und Transportplattform 2 höhenverstellbar halten. Das Kragelement 170 ist in Figur 7 nicht dargestellt.

Es wird nachfolgend davon ausgegangen, dass das Kragelement 170 ein kreisförmiges Ringelement ist, welches auf seiner Unterseite Aufnahmen 171 zur Aufnahme der Auftragsvorrichtungen 1a, 1a', 1a", der Verfestigungsvorrichtungen 1, 1 `, 1" sowie der Erwärmungsvorrichtung 1b aufweist. In Figur 8 ist beispielhaft die Aufnahme von zwei Auftragsvorrichtungen 1a, 1a" auf der Unterseite des als Kragelement ausgebildeten kreisförmiges Ringelementes 170 in den Aufnahmen 171 dargestellt.

Unterhalb der Auftragsvorrichtungen 1a, 1a`, 1a" und der Verfestigungsvorrichtungen 1, 1', 1" sowie der Erwärmungsvorrichtung 1b ist die Arbeits- und Transportplattform 2 angeordnet, die in der Ausführungsform gleichzeitig als Transportplattform dient und somit eine weitere Funktion übernimmt. Die Arbeits- und Transportplattform 2 ist auf einer zweiten Stützkonstruktion 150B einer Unterkonstruktion 150 angeordnet und bildet einen horizontalen ortsfesten Tisch 150B-1 150A-1 aus. Die Arbeits- und Transportplattform 2 umfasst auf der Unterseite ein bolzenartiges Plattform-Führungselement 2A als Führung, die in eine Führungsnut 150B-11 des Tisches 150B-1 eingreift. Die Arbeits- und Transportplattform 2 und die zweite Stützkonstruktion 150B sind ebenfalls kreisringförmig ausgebildet.

In der in Figur 8 dargestellten Position der Arbeits- und Transportplattform 2 und dem Kragelement 170 liegt zwischen der Unterkante des Kragelementes 170, welches die Auftragsvorrichtungen 1a, 1a', 1a" und die Verfestigungsvorrichtungen 1, 1', 1" sowie die Erwärmungsvorrichtung 1b aufnimmt, in der Höhe hmax und der Null-Höhe h0 der Arbeits- und Transportplattform 2 ein maximaler Höhenabstand von Ahmax. Bei diesem maximalen Höhenabstand Ahmax ist das mindestens eine Bauteil B, insbesondere die Bauteile B in dem zur Herstellung vorgesehenen Bauraum BR bereits fertiggestellt.

Auf der Oberseite des Kragelementes 170 sind die Teilzuführungen 120C, 120C`, 120" angeordnet und mit dem Kragelement 170 verbunden. Eine Höhenverstellung des Kragelementes 170 bewirkt eine Mitnahme der Teilzuführungen 120C, 120C`, 120", die gegenüber dem Verteiler 120 in geeigneter Weise beweglich und/oder flexibel angeordnet sind, sodass sich die Teilzuführungen 120C, 120C`, 120 mit dem Kragelement 170 mitbewegen können.

Das Kragelement 170 wird wie erwähnt von dem höhenverstellbaren Stützglied 180 gehalten, welches mit einer bodenfesten ersten Höhenverstelleinheit 190A fest verbunden ist. In der Ausführungsform ist die Höhenverstelleinheit 190A ein Hubzylinder mit einer horizontalen Tragplatte, die mit dem Stützglied 180 verbunden ist. Die Tragplatte steht ferner mit einem kreisringförmigen inneren Bauraumbegrenzungselement BR1 in Verbindung.

Das Stützglied 180 ist über mechanische Kragelement-Führungselemente 175, die zwischen Kragelement 170 und Stützglied 180 angeordnet sind, mit dem Stützglied 180 derart verbunden, sodass das Kragelement 170 relativ zu dem Stützelement 180 rotieren kann. Eine Höhenverstellung des Stützgliedes 180 wird gemäß der beschriebenen Anordnung auf das Kragelement 170 übertragen.

Über einen Antrieb 190, insbesondere einen elektromagnetischen Antrieb wird dafür gesorgt, dass das Kragelement 170 auf dem höhenverstellbaren Stützglied 180 in einer vorgebbaren Geschwindigkeit rotiert, wobei während der Rotation eine diskontinuierliche (gestufte) oder eine kontinuierliche Höhenverstellung über die erste Höhenverstelleinheit 190A bewirkbar ist.

Dadurch, dass die Tragplatte mit dem kreisringförmigen inneren Bauraumbegrenzungselement BR1 in Verbindung steht, wird das innere Bauraumbegrenzungselement BR1 bei der diskontinuierlichen (gestuften) oder kontinuierlichen Höhenverstellung über die erste Höhenverstelleinheit 190A synchron mitgenommen. Das innere Bauraumbegrenzungselement BR1 stellt mit anderen Worten eine gegenüber der Arbeits- und Transportplattform 2 höhenverstellbare zylindrische Innenwand dar.

Das Stützglied 180 dient ferner durch die Ausbildung seines langen Schenkels und durch Anordnung des langen Schenkels parallel zu dem inneren Bauraumbegrenzungselement BR1 als Schutzelement der ersten Höhenverstelleinheit 190A vor Sand, der bei der Herstellung des Bauteils aus dem zwischen dem inneren Bauraumbegrenzungselement BR1 und einem äußeren Bauraumbegrenzungselement BR2 gebildeten Bauraum BR fallen könnte.

Das äußere Bauraumbegrenzungselement BR2 weist eine zweite Höhenverstelleinheit 190B auf. In der Ausführungsform ist die zweite Höhenverstelleinheit 190B ebenfalls ein Hubzylinder der mittels einer Tragplatte an dem äußeren Bauraumbegrenzungselement BR2 angreift. Das äußere Bauraumbegrenzungselement BR1 stellt mit anderen Worten eine gegenüber der Arbeits- und Transportplattform 2 höhenverstellbare zylindrische Außenwand dar.

Die Höhenverstellung der Bauraumbegrenzungselemente BR1, BR2 ist über eine Steuerung derart synchronisiert, sodass die Oberkanten der Bauraumbegrenzungselemente BR1, BR2 zu Bildung des gewünschten Bauraums B stets die gleiche Höhe aufweisen.

Die Vorrichtung ist dazu eingerichtet das erfindungsgemäße Verfahren auszuführen. Zu diesem Zweck umfasst die Vorrichtung insbesondere eine Steuereinrichtung S mit entsprechenden in den Figuren nur angedeuteten Steuerleitungen L1 und Leitungen zur elektrischen Versorgung L2, in der ein computerlesbarer Programmalgorithmus zur Ausführung des Verfahrens und gegebenenfalls erforderliche Kennfelder gespeichert sind. Zudem ist eine Versorgungsleitung BL dargestellt, die das Mittel zur chemischen Verfestigung, den Binder zu der mindestens einen Verfestigungsvorrichtung 1, 1', 1" zuführt. Die Leitungen L1, L2, BL werden über eine Drehdurchführung vorzugsweise zentrisch durch den Tisch 150A-1 geführt und verteilen die genannten Versorgungsmittel über das Verteilungs- und Versorgungsmodul 160 zu den Auftragsvorrichtungen 1a, 1a', 1a" und den Verfestigungsvorrichtungen 1, 1', 1" sowie der Erwärmungsvorrichtung 1b.

Das Verfahren zur kontinuierlichen generativen Fertigung von Bauteilen B, die aus mehreren aufeinander aufbauenden Schichten gebildet werden, wird noch einmal anhand der vorbeschrieben Vorrichtung erläutert.

In einer Startposition zur Herstellung des Bauteils B ist die Unterkante der Auftragsvorrichtungen 1a, 1a', 1a" und der Verfestigungsvorrichtungen 1, 1', 1" sowie der Erwärmungsvorrichtung 1b und das synchronisierte innere Bauraumbegrenzungselement BR1 mit seiner Oberkante über die erste Höhenverstelleinheit 190A gegenüber der Darstellung in Figur 8 von der Höhe hmax in eine Anfangs-Höhe h1 heruntergefahren angeordnet. Parallel dazu ist die äußere Bauraumbegrenzungselement BR2 mit seiner Oberkante über die zweite Höhenverstelleinheit 190A ebenfalls in der Anfangs-Höhe h1 angeordnet.

Die Anfangs-Höhe h1 entspricht gegenüber der Höhe h0 der Höhe einer ersten Herstellungsschicht. Mit anderen Worten die Anfangs-Höhe h1 minus der Null-Höhe h0 der Arbeits- und Transportplattform 2 (h1 - h0) entspricht der Schichthöhe der ersten Schicht des aus mehreren aufeinander aufbauenden Schichten hergestellten Bauteils B. Die Differenz h1 - h0 ist der minimale Höhenabstand zwischen der Unterkante in der Anfangshöhe h1 des Kragelementes 170, welches die Auftragsvorrichtungen 1a, 1a`, 1a" und die Verfestigungsvorrichtungen 1, 1', 1" sowie die Erwärmungsvorrichtung 1b aufnimmt, und der Null-Höhe h0 der Arbeits- und Transportplattform 2.

Erfindungsgemäß rotieren, die im Kragelement 170 in der ringförmigen Abfolge hintereinander angeordneten Verfestigungsvorrichtungen 1, 1', 1", einschließlich der im Kragelement 170 zugehörigen Auftragsvorrichtungen 1a, 1a`, 1a" um die y-Achse Y beispielsweise in Uhrzeigerrichtung R' gegenüber der Arbeits- und Transportplattform 2, wobei das Kragelement 170 in Richtung C' diskontinuierlich nach jeder vollständigen Umdrehung um die y-Achse oder kontinuierlich während einer Umdrehung um die y-Achse mittels der ersten Höhenverstelleinheit 190A anhebbar ist. Parallel dazu wird das innere Bauraumbegrenzungselement BR1 mittels der ersten Höhenverstelleinheit 190A und das äußere Bauraumbegrenzungselement BR über die zweite Höhenverstelleinheit 190B angehoben, sodass die Bauraumbegrenzung für den notwendigen Bauraum BR gebildet wird.

Durch die aus stetiger Rotation und kontinuierlicher oder diskontinuierlicher Höhenverstellung überlagerte Relativbewegung der Verfestigungsvorrichtungen 1, 1', 1" und zugehörigen Auftragsvorrichtungen 1a, 1a`, 1a" gegenüber der Arbeits- und Transportplattform 2 werden die Schichten E1, E2 usw. gebildet.

In der in Figur 8 dargestellten Endposition zur Herstellung des Bauteils B ist die Unterkante der Auftragsvorrichtungen 1a, 1a', 1a" und der Verfestigungsvorrichtungen 1, 1', 1" sowie der Erwärmungsvorrichtung 1b und das synchronisierte innere Bauraumbegrenzungselement BR1 mit seiner Oberkante über die erste Höhenverstelleinheit 190A auf die Höhe hmax gefahren, während parallel dazu das äußere Bauraumbegrenzungselement BR2 mit seiner Oberkante über die zweite Höhenverstelleinheit 190A ebenfalls in der Höhe hmax angeordnet ist.

Während der Herstellung des Bauteils B oder nach der Herstellung des Bauteils B wird das Bauteil B mittels der mindestens einen Erwärmungsvorrichtung 1b, die insbesondere eine Art Mikrowelle sein kann, getrocknet, das heißt vorhandene Restfeuchte wird aus dem Bauteil B ausgetragen.

Wie die Figuren 8 und 9 in einer Zusammenschau zeigen, umfasst die Vorrichtung einen zweiten Vorrichtungsteil (Entnahmevorrichtung), der es ermöglicht das fertiggestellte Bauteil B zu entnehmen.

Wie in den Draufsichten zu erkennen ist, umfasst die Arbeits- und Transportplattform 2 Segmente 2-1, 2-2 bis 2-n (n= Anzahl der Segmente). Ein oder mehrere Segmente 2-n tragen ein fertiggestelltes Bauteil B, weshalb die Segmente 2-n Trägersegmente genannt werden.

In dem kreisförmigen Ring innerhalb des ersten Vorrichtungsteils bilden die Trägersegmente 2-n eine geschlossene Arbeits- und Transportplattform 2, wie in der Draufsicht der Figur 7 verdeutlicht ist.

Das äußere Bauraumbegrenzungselement BR2 weist in einem vorgebbaren Bereich eine erste Öffnung auf, die als Entnahmestelle 201 der Trägersegmente 2-n, mithin der Arbeits- und Transportplattform 2 aus dem ersten Vorrichtungsteil in das zweite Vorrichtungsteil dient.

Das äußere Bauraumbegrenzungselement BR2 weist in einem vorgebbaren Bereich eine zweite Öffnung auf, die als Zuführungsstelle 202 der Trägersegmente 2-n, mithin der Arbeits- und Transportplattform 2 aus dem zweiten Vorrichtungsteil in das erste Vorrichtungsteil dient.

Zwischen der Entnahmestelle 201 und der Zuführungsstelle 202 ist ein weiterer Tisch 250B-1 ausgebildet, der eine zu der Führungsnut 150B-11 korrespondierende Führungsnut 250B-11 aufweist, auf dem die Trägersegmente 2-n über mindestens eine im/am Tisch 250B-1 angeordnete vorzugsweise integrierte nicht dargestellte Antriebstechnik, insbesondere Ketten, Rollen, etc. verfahrbar sind.

Über den Tisch 250-1 können die Antriebstechnik und die Trägersegmente 2-n aus dem ersten Vorrichtungsteil entnommen in das zweite Vorrichtungsteil und wieder in das erste Vorrichtungsteil gefahren werden, da die bei der Herstellung des Bauteils B in dem kreisförmigen Ring innerhalb des ersten Vorrichtungsteils angeordnete geschlossene Arbeits- und Transportplattform 2 zwei Trägersegmente aufweist, die nicht miteinander verbunden sind.

Wie in den Figuren 9 und 10 erkennbar ist, werden zwei Arbeits- und Transportplattformen 2 aus Trägersegmenten 2-n verwendet. Eine erste Arbeits- und Transportplattform 21, die aus dem ersten Vorrichtungsteil herausgefahren wird und eine zweite Arbeits- und Transportplattform 22, die in das zweite Vorrichtungsteil bereit steht und in das erste Vorrichtungsteil hineingefahren wird.

Das zweite Vorrichtungsteil umfasst ebenfalls zumindest teilweise ein inneres und ein äußeres Bauraumbegrenzungselement BR1, BR2, die zwischen der Höhe hmax und der Höhe h0 verfahrbar sind (vergleiche Figur 8).

In den Figuren sind ein inneres und ein äußere Bauraumbegrenzungselemente BR1, BR2 dargestellt, die auf der gesamten Länge des Tisches 250B-1 ausgebildet sind. Sie können auch nur streckenweise entlang des Tisches 250B-1 angeordnet sein. Das innere und das äußere Bauraumbegrenzungselement BR1, BR2 sind ebenfalls über mindestens eine nicht dargestellte Höhenverstelleinheit vertikal höhenverfahrbar.

Erfindungsgemäß ist vorgesehen, dass die Trägersegmente 2-n der Arbeits- und Transportplattform 2 mit dem die Bauteile B umgebenden Sandbett aus dem ersten Vorrichtungsteil, insbesondere dem Druckerteil in das zweite Vorrichtungsteil zur Entnahme der Bauteile B herausgefahren werden. Das zweite Vorrichtungsteil stellt eine Entnahmevorrichtung der Vorrichtung dar.

Sobald die Trägersegmente 2-n der Arbeits- und Transportplattform 2 mit dem mindestens einen Bauteil B in dem Entnahmebereich angekommen sind, werden die Bauraumbegrenzungselemente BR1, BR2 auf die Null-Höhe h0 herunterfahren, wodurch die Arbeits- und Transportplattform 21 oder 22 durch Wegfall der randseitigen Begrenzung zumindest teilweise selbsttätig entsandet werden. Zudem bilden sich außerhalb einer Kurvenfahrt bei einer vorgesehenen Linearführung der Trägersegmente 2-n zumindest zweitweise Zwischenräume zwischen den Trägersegmenten 2-n, wodurch ein weitere Teil des Sandbettes durch die Schwerkraft des Sandes nach unten zwischen den Trägersegmenten 2-n abfließt. Aus den Figuren ist ersichtlich, dass die Trägersegmente 2-n segmentiert sind. Sie liegen in dem ersten Vorrichtungsteil spaltfrei kreisförmig aneinander, wodurch die Trägersegmente 2-n nachdem sie den kurvenfreien Bereich des zweiten Vorrichtungsteils verlassen zwangsweise Zwischenräume bilden.

Im zweiten Vorrichtungsteil der Entnahmevorrichtung findet eine durch eine Person P eine manuelle oder durch einen Roboter R robotergestützte Entnahme des/der Bauteils/Bauteile B statt.

Die Erwärmungsvorrichtung 1b kann beispielsweise in die Entnahmevorrichtung integriert sein. Vor der Entnahme des Bauteils ist bei dieser Ausführungsform die Erwärmungsvorrichtung 1b in die Entnahmevorrichtung integriert angeordnet, sodass eine Trocknung des Bauteils B nicht in dem ersten Vorrichtungsteil, sondern in dem zweiten Vorrichtungsteil erfolgt. Auf die Variabilität der Anordnung der Erwärmungsvorrichtung 1b innerhalb der Vorrichtung wurde bereits hingewiesen.

Erfindungsgemäß ist in dem ersten und zweiten Vorrichtungsteil ein drittes Vorrichtungsteil (Reinigungsvorrichtung) integriert angeordnet.

Das dritte Vorrichtungsteil umfasst drei Reinigungsbereiche mit drei Reinigungseinheiten.

Eine erste Reinigungseinheit 301 ist wie Figur 9 zeigt, während der Herstellung des Bauteils B außerhalb des ersten Vorrichtungsteils angeordnet. Sobald die erste oder zweite Arbeits- und Transportplattform 21, 22 zur Entnahme der Bauteils aus dem ersten Vorrichtungsteil herausgefahren ist, fährt die erste Reinigungseinheiten radial in das erste Vorrichtungsteil ein und reinigt den Tisch 150B-1. Das äußere Bauraumbegrenzungselement BR2 wird dazu heruntergefahren, wie Figur 10 verdeutlicht.

Eine zweite Reinigungseinheit 302 ist wie Figur 9 zeigt, in Bewegungsrichtung der Arbeits- und Transportplattform 21, 22 vor dem manuellen oder durch einen Roboter R robotergestützten Entnahmebereich angeordnet. Mithilfe der zweiten Reinigungseinheit 302 wird auf den Trägersegmenten 2-n der Arbeits- und Transportplattform/en 21, 22 vorhandener Sand entfernt, wodurch das Bauteil B vollständig von Sand befreit ist.

Mithilfe der dritten Reinigungseinheit 303 werden der Tisch 250B-1 des dritten Vorrichtungsteils und/oder die Trägersegmente 2-n der Arbeits- und Transportplattformen 21, 22 von Sand entfernt, sodass die Trägersegmente 2-n in vorteilhafter Weise vollständig und automatisiert von Sand befreit wieder in das erste Vorrichtungsteil, insbesondere den Drucker eingefahren werden können.

### Bezugszeichenliste

- 1, 1', 1": Verfestigungsvorrichtung
- 1a, 1a', 1a": Auftragsvorrichtung
- 1b, 1b', 1b": Erwärmungsvorrichtung
- 2: Arbeits- und Transportplattform
- 21: erste Arbeits- und Transportplattform
- 22: zweite Arbeits- und Transportplattform
- 2A: Plattform-Führungselement
- 2-n: Segmente (n = Anzahl, 2-1, 2-2, 2-3 ...)
- A: Abstand
- B: Bauteil
- C, C': Richtung einer Absenkung/Abhebung
- E1, E2: Abstandsebene
- R, R': Richtung einer Relativbewegung
- I: erster Durchgang
- II: zweiter Durchgang
- M: Mittelpunkt
- Y: y-Achse, Rotationsachse
- 120: Zuführungsvorrichtung
- 120A: Hauptzuführung
- 120B: Verteiler
- 120C, 120C`, 120C": Teilzuführungen
- 150: Unterkonstruktion/en
- 150A: erste Stützkonstruktion
- 150A-1: Tisch
- 150B: zweite Stützkonstruktion
- 150B-1: Tisch
- 150B-11: Führungsnut
- 160: Versorgungs- und Verteilungsmodul
- 170: Aufnahmeelement, Kragelement
- 171: Aufnahme
- 175: Kragelement-Führungselemente
- 180: Stützglied
- 190A: erste Höhenverstelleinheit
- 190B: zweite Höhenverstelleinheit
- 201: Entnahmestelle
- 202: Zuführungsstelle
- 250B-1: Tisch
- 250B-11: Führungsnut
- hmax: maximaler Höhenabstand
- h0: Null-Höhe der Arbeits- und Transportplattform 2
- h1: Anfangshöhe
- Ahmax: maximaler Höhenabstand zwischen h0 und h1
- BR: Bauraum
- BR1: erstes, inneres Bauraumbegrenzungselement
- BR2: zweites, äußeres Bauraumbegrenzungselement
- 301: erste Reinigungseinheit
- 302: zweite Reinigungseinheit
- 303: dritte Reinigungseinheit
- S: Steuereinrichtung
- R: Roboter
- P: Person

## Patentansprüche

1. Vorrichtung zur kontinuierlichen generativen Fertigung von dreidimensionalen Bauteilen (B), die aus mehreren aufeinander aufbauenden Schichten gebildet werden, wobei mehrere Verfestigungsvorrichtungen (1, 1', 1") zur Verfestigung eines aufgetragenen pulverförmigen Werkstoffs in einer ringförmigen Abfolge hintereinander gegenüber einer Arbeits- und Transportplattform (2) angeordnet sind und sich ausgehend von einer ersten Verfestigungsvorrichtung (1) bis zu einer letzten Verfestigungsvorrichtung (1") der Abfolge ein Abstand (A) jeder einzelnen Verfestigungsvorrichtung (1, 1', 1") gegenüber der Arbeits- und Transportplattform (2) vergrößert, sodass wenn eine Relativbewegung zwischen den Verfestigungsvorrichtungen (1, 1', 1") und der Arbeits- und Transportplattform (2) für eine Schichtbildung erfolgt, gleichzeitig mit jeder auf die erste Verfestigungsvorrichtung (1) folgenden weiteren Verfestigungsvorrichtung (1', 1"), eine Schicht auf der mittels der jeweils in der Abfolge vorangehenden Verfestigungsvorrichtung (1, 1', 1") gebildeten Schicht gebildet wird,
wobei je eine Auftragsvorrichtung (1a, 1a', 1a") mehrerer Auftragsvorrichtungen (1a, 1a', 1a") zum Auftragen des pulverförmigen Werkstoffs und je eine Verfestigungsvorrichtung (1, 1', 1") der mehreren Verfestigungsvorrichtungen (1, 1', 1") zur Verfestigung des Werkstoffs eine Prozesseinheit bilden, wobei eine der mehreren Verfestigungsvorrichtungen (1, 1', 1") in der ringförmigen Abfolge unmittelbar einer der mehreren Auftragsvorrichtungen (1a, 1a', 1a") folgt, wobei die aufeinanderfolgenden Vorrichtungen (1, 1a; 1', 1a`, 1", 1a") der Prozesseinheiten in der ringförmigen Abfolge einzeln hintereinander oder in einem Modul zusammengefasst hintereinander angeordnet sind, wobei die in Prozesseinheiten ausgebildeten mehreren Auftragsvorrichtungen (1a, 1a`, 1a") und die mehreren Verfestigungsvorrichtungen (1, 1', 1") in der ringförmigen Abfolge, von einem Mittelpunkt (M) eines Kreises ausgehend, auf der Kreislinie mit einem vorgebbaren Kreisumfang radial zu einer durch den Mittelpunkt (M) führenden Y-Achse (Y) angeordnet sind, sodass die Prozesseinheiten (1, 1a; 1', 1a', 1", 1a") um den auf Y-Achse (Y) liegenden Mittelpunkt (M) gegenüber der Arbeits- und Transportplattform (2) rotieren, wenn für eine Schichtbildung eine Relativbewegung zwischen den Prozesseinheiten und der Arbeits- und Transportplattform (2) erfolgt und jeder Prozesseinheit oder mehreren Prozesseinheiten gemeinsam eine Erwärmungsvorrichtung (1b, 1b`, 1b") zugeordnet ist, die von dem Mittelpunkt (M) des Kreises ausgehend auf der Kreislinie mit dem vorgebbaren Kreisumfang radial zu der durch den Mittelpunkt (M) führenden Y-Achse (Y) angeordnet ist/sind, sodass die Erwärmungsvorrichtung (1b, 1b', 1b") um den auf Y-Achse (Y) liegenden Mittelpunkt (M) gegenüber der Arbeits- und Transportplattform (2) rotiert/rotieren, wenn für eine Schichtbildung eine Relativbewegung zwischen den Prozesseinheiten und der Arbeits- und Transportplattform (2) erfolgt,
**dadurch gekennzeichnet, dass**
die Zuführung des pulverförmigen Werkstoffs zu den Auftragsvorrichtungen (1a, 1a`, 1a") der Prozesseinheiten (1, 1a; 1', 1a', 1", 1a") zentral über eine Zuführungsvorrichtung (120) erfolgt, die eine Hauptzuführung (120A) und einen Verteiler (120B) umfasst, der die mehreren Auftragsvorrichtungen (1a, 1a', 1a") der Prozesseinheiten (1, 1a; 1', 1a', 1", 1a") über dezentrale Teilzuführungen (120C, 120C`, 120C") mit dem pulverförmigen Werkstoff versorgt, wobei die Teilzuführungen (120C, 120C', 120C") jeweils entweder mit einem ringförmigen Aufnahmeelement (170) oder mit mehreren Aufnahmeelementen in Verbindung stehen, welches oder welche zumindest die mehreren Auftragsvorrichtungen (1a, 1a`, 1a") der Prozesseinheiten (1, 1a; 1', 1a', 1", 1a") halten, wobei die Teilzuführungen (120C, 120C`, 120C") gegenüber dem Verteiler und/oder gegenüber den Prozesseinheiten flexibel ausgebildet oder als bewegliche Teilzuführungen ausgebildet sind, wobei das ringförmige Aufnahmeelement (170) oder die mehreren Aufnahmeelemente, die als Prozesseinheiten (1, 1a; 1', 1a`, 1", 1a") ausgebildeten mehreren Auftragsvorrichtungen (1a, 1a`, 1a") und die mehreren Verfestigungsvorrichtungen (1, 1', 1") halten, wobei dem ringförmigen Aufnahmeelement (170) oder den mehreren Aufnahmeelementen mindestens eine Höhenverstelleinheit (190A) zugeordnet ist, die eine Höhenverstellung des oder der Aufnahmeelemente (170) entlang der y-Achse (Y) ermöglicht/ermöglichen, wodurch bei der Fertigung des Bauteils (B) zur Schichtbildung eine synchronisierte Relativbewegung zwischen den mehreren Verfestigungsvorrichtungen (1, 1', 1") und den mehreren Auftragsvorrichtungen (1a, 1a', 1a") gegenüber der Arbeits- und Transportplattform (2) erfolgt, wobei das Aufnahmeelement (170) oder die mehreren Aufnahmeelementen als Kragelement/ Kragelementen ausgebildet wird/werden, welches die Auftragsvorrichtungen (1a, 1a', 1a") und die Verfestigungsvorrichtungen (1 , 1 ', 1 ") sowie die Erwärmungsvorrichtung (1b) aufnimmt, wobei zwischen der Unterkante des Kragelementes (170) in einer maximalen Höhe (hmax) und einer Null-Höhe (h0) der Arbeits- und Transportplattform (2) ein maximaler Höhenabstand (Δhmax) vorliegt, wobei bei diesem maximalen Höhenabstand (Δhmax) das mindestens eine Bauteil (B), in dem zur Herstellung vorgesehenen Bauraum (BR) fertiggestellt ist.

2. Vorrichtung nach Anspruch 1, **dadurch gekennzeichnet, dass** die Arbeits- und Transportplattform (2) gegenüber den in der ringförmigen Abfolge hintereinander angeordneten mehreren Verfestigungsvorrichtungen (1, 1', 1") absenkbar ist oder dass die in der ringförmigen Abfolge hintereinander angeordneten mehreren Verfestigungsvorrichtungen (1, 1', 1") gegenüber der Arbeits- und Transportplattform (2) anhebbar sind, sodass wenn die durch die letzte Verfestigungsvorrichtung (1") der ringförmigen Abfolge gebildete Schicht gebildet ist, die Arbeits- und Transportplattform (2) gesenkt wird oder die Verfestigungsvorrichtungen (1, 1', 1") angehoben werden und zur weiteren Schichtbildung eine erneute Relativbewegung zwischen den mehreren Verfestigungsvorrichtungen (1, 1', 1") und der Arbeits- und Transportplattform (2) erfolgt und beginnend mit der ersten Verfestigungsvorrichtung (1) sowie den folgenden Verfestigungsvorrichtungen (1', 1") eine weitere gleichzeitige Schichtbildung erfolgt.

3. Vorrichtung nach Anspruch 1, **dadurch gekennzeichnet, dass** die Arbeits- und Transportplattform (2) gegenüber den in der ringförmigen Abfolge hintereinander angeordneten mehreren Verfestigungsvorrichtungen (1, 1', 1") absenkbar ist oder dass die in der ringförmigen Abfolge hintereinander angeordneten mehreren Verfestigungsvorrichtungen (1, 1', 1") gegenüber der Arbeits- und Transportplattform (2) anhebbar sind, sodass wenn während der Relativbewegung zwischen den mehreren Verfestigungsvorrichtungen (1, 1', 1") und der Arbeits- und Transportplattform (2) für eine Schichtbildung, ein Absenken der Arbeits- und Transportplattform (2) gegenüber den in der ringförmigen Abfolge hintereinander angeordneten mehreren Verfestigungsvorrichtungen (1, 1', 1") erfolgt oder alternativ oder zusätzlich ein Anheben der in der ringförmigen Abfolge hintereinander angeordneten mehreren Verfestigungsvorrichtungen (1, 1', 1") gegenüber der Arbeits- und Transportplattform (2) erfolgt, ein spiralförmiger Schichtaufbau erfolgt.

4. Vorrichtung nach Anspruch 1, **dadurch gekennzeichnet, dass** die Arbeits- und Transportplattform (2) ein endloses in sich geschlossenes Förderband ist.

5. Vorrichtung nach Anspruch 1, **dadurch gekennzeichnet, dass** unterhalb des ringförmigen Aufnahmeelementes (170) oder der mehreren Aufnahmeelemente in Richtung der y-Achse (Y) gesehen, welche die als Prozesseinheiten (1, 1a; 1', 1a', 1", 1a") ausgebildeten mehreren Auftragsvorrichtungen (1a, 1a`, 1a") und die Verfestigungsvorrichtungen (1, 1', 1") halten, oberhalb der Arbeits- und Transportplattform (2) - in Richtung der y-Achse (Y) gesehen - ein Bauraum (BR) für den pulverförmigen Werkstoff geschaffen wird, der bei der Schichtbildung der mehreren aufeinander aufbauenden Schichten diskontinuierlich oder kontinuierlich mittels seitlich der Arbeits- und Transportplattform (2) angeordneter reversibel verfahrbarer Bauraumbegrenzungselemente (BR1, BR2) veränderbar ist, wobei die Bauraumbegrenzungselemente (BR1, BR2) in Richtung der y-Achse (Y) verfahrbar und quer zur Arbeits- und Transportplattform (2) angeordnet sind.

6. Vorrichtung nach Anspruch 1, **dadurch gekennzeichnet, dass** den reversibel verfahrbar angeordneten Bauraumbegrenzungselementen (BR1, BR2) mindestens eine Höhenverstelleinheit (190A, 190B) zugeordnet ist.

7. Vorrichtung nach Anspruch 1, **dadurch gekennzeichnet, dass** die Vorrichtung ein erstes Vorrichtungsteil zur Herstellung des mindestens einen Bauteils (B) nach mindestens einem der Ansprüche 1 bis 6 und ein zweites Vorrichtungsteil zur Entnahme des mindestens einen Bauteils (B) umfasst.

8. Vorrichtung nach Anspruch 7, **dadurch gekennzeichnet, dass** in dem ersten und zweiten Vorrichtungsteil mindestens eine Arbeits- und Transportplattform (2; 21, 22) angeordnet ist, welche als offenes Förderband mit in Bewegungsrichtung der Arbeits- und Transportplattform (2; 21, 22) gegenüberliegenden Enden ausgebildet ist, wobei das mindestens eine gegenüberliegende Ende aufweisende offene Förderband (2; 21, 22) miteinander in Verbindung stehende Segmente (2-n) aufweist.

9. Vorrichtung nach den Ansprüchen 7 und 8, **dadurch gekennzeichnet, dass** das erste Vorrichtungsteil zur Herstellung des mindestens einen Bauteils (B) und das zweite Vorrichtungsteil zur Entnahme des mindestens einen Bauteils (B) innerhalb des ersten und/oder zweiten Vorrichtungsteils mindestens eine Reinigungseinheit (301, 302, 303) umfasst oder umfassen, wobei
• eine erste Reinigungseinheit (301) zur Reinigung eines Tisches (150B-1) angeordnet ist, welcher innerhalb des ersten Vorrichtungsteils die mindestens eine Arbeits- und Transportplattform (2; 21, 22) trägt, und/oder
• eine zweite Reinigungseinheit (302) zur Reinigung der mindestens einen Arbeits- und Transportplattform (2; 21, 22) sowie des mindestens einen Bauteils (B) angeordnet ist, welche innerhalb des zweiten Vorrichtungsteils das mindestens eine Bauteil (B) auf der mindestens einen Arbeits- und Transportplattform (2; 21, 22) trägt, und/oder
• eine dritte Reinigungseinheit (301) zur Reinigung des Tisches (250B-1) angeordnet ist, welcher innerhalb des ersten Vorrichtungsteils die mindestens eine Arbeits- und Transportplattform (2; 21, 22) trägt.

10. Verfahren zur kontinuierlichen generativen Fertigung von dreidimensionalen Bauteilen (B), die aus mehreren aufeinander aufbauenden Schichten gebildet werden, wobei mehrere Verfestigungsvorrichtungen (1, 1', 1") zur Verfestigung eines aufgetragenen pulverförmigen Werkstoffs in einer Abfolge hintereinander gegenüber einer Arbeits- und Transportplattform (2) angeordnet sind, wobei sich ausgehend von einer ersten Verfestigungsvorrichtung (1) bis zu einer letzten Verfestigungsvorrichtung (1") einer ringförmigen Abfolge der Abstand (A) jeder einzelnen Verfestigungsvorrichtung (1, 1', 1") gegenüber der Arbeits- und Transportplattform (2) vergrößert, wobei für eine Schichtbildung eine Relativbewegung zwischen den Verfestigungsvorrichtungen (1, 1`, 1") und der Arbeits- und Transportplattform (2) vorgenommen wird, sodass gleichzeitig mit jeder auf die erste Verfestigungsvorrichtung (1) folgenden weiteren Verfestigungsvorrichtung (1', 1"), eine Schicht auf der mittels der jeweils in der Abfolge vorangehenden Verfestigungsvorrichtung (1, 1', 1") gebildeten Schicht gebildet wird, wobei je eine Auftragsvorrichtung (1a, 1a', 1a") mehrerer Auftragsvorrichtungen (1a, 1a', 1a") zum Auftragen des pulverförmigen Werkstoffs und je eine Verfestigungsvorrichtung (1, 1', 1") der mehreren Verfestigungsvorrichtungen (1, 1', 1") zur Verfestigung des Werkstoffs eine Prozesseinheit bilden, wobei eine der mehreren Verfestigungsvorrichtungen (1, 1', 1") in der ringförmigen Abfolge unmittelbar einer der mehreren Auftragsvorrichtungen (1a, 1a', 1a") folgt, wobei die aufeinanderfolgenden Vorrichtungen (1, 1a; 1', 1a`, 1", 1a") der Prozesseinheiten in der ringförmigen Abfolge einzeln hintereinander oder in einem Modul zusammengefasst hintereinander angeordnet sind, wobei die in Prozesseinheiten ausgebildeten mehreren Auftragsvorrichtungen (1a, 1a`, 1a") und die mehreren Verfestigungsvorrichtungen (1, 1', 1") in der ringförmigen Abfolge, von einem Mittelpunkt (M) eines Kreises ausgehend, auf der Kreislinie mit einem vorgebbaren Kreisumfang radial zu einer durch den Mittelpunkt (M) führenden Y-Achse (Y) angeordnet sind, sodass die Prozesseinheiten (1, 1a; 1', 1a', 1", 1a") um den auf Y-Achse (Y) liegenden Mittelpunkt (M) gegenüber der Arbeits- und Transportplattform (2) rotieren, wenn für eine Schichtbildung eine Relativbewegung zwischen den Prozesseinheiten und der Arbeits- und Transportplattform (2) erfolgt, und jeder Prozesseinheit oder mehreren Prozesseinheiten gemeinsam eine Erwärmungsvorrichtung (1b, 1b`, 1b") zugeordnet ist, die von dem Mittelpunkt (M) des Kreises ausgehend auf der Kreislinie mit dem vorgebbaren Kreisumfang radial zu der durch den Mittelpunkt (M) führenden Y-Achse (Y) angeordnet ist/sind, sodass die Erwärmungsvorrichtung/en (1b, 1b', 1b") um den auf Y-Achse (Y) liegenden Mittelpunkt (M) gegenüber der Arbeits- und Transportplattform (2) rotiert/rotieren, wenn für eine Schichtbildung eine Relativbewegung zwischen den Prozesseinheiten und der Arbeits- und Transportplattform (2) erfolgt,
**dadurch gekennzeichnet, dass**
die bei der Fertigung des mindestens einen Bauteils (B) durch die Relativbewegung zwischen den Verfestigungsvorrichtungen (1, 1', 1") und der Arbeits- und Transportplattform (2) erzeugten Schichten durch die mehreren in einer ringförmigen Abfolge hintereinander angeordneten Verfestigungsvorrichtungen (1, 1', 1") gebildet werden, wobei die Zuführung des pulverförmigen Werkstoffs zu den Auftragsvorrichtungen (1a, 1a', 1a") der Prozesseinheiten (1, 1a; 1', 1a', 1", 1a") zentral über eine Zuführungsvorrichtung (120) erfolgt, die eine Hauptzuführung (120A) und einen Verteiler (120B) umfasst, der die mehreren Auftragsvorrichtungen (1a, 1a', 1a") der Prozesseinheiten (1, 1a; 1', 1a', 1", 1a") über dezentrale Teilzuführungen (120C, 120C', 120C") mit dem pulverförmigen Werkstoff versorgt, wobei die Teilzuführungen (120C, 120C`, 120C") jeweils entweder mit einem ringförmigen Aufnahmeelement (170) oder mit mehreren Aufnahmeelementen in Verbindung stehen, welches oder welche zumindest die mehreren Auftragsvorrichtungen (1a, 1a', 1a") der Prozesseinheiten (1, 1a; 1', 1a', 1", 1a") halten, wobei die Teilzuführungen (120C, 120C`, 120C") gegenüber dem Verteiler und/oder gegenüber den Prozesseinheiten flexibel ausgebildet oder als bewegliche Teilzuführungen ausgebildet sind, wobei das ringförmige Aufnahmeelement (170) oder die mehreren Aufnahmeelemente, die als Prozesseinheiten (1, 1a; 1', 1a', 1", 1a") ausgebildeten mehreren Auftragsvorrichtungen (1a, 1a`, 1a") und die mehreren Verfestigungsvorrichtungen (1, 1', 1") halten, wobei dem ringförmigen Aufnahmeelement (170) oder den mehreren Aufnahmeelementen mindestens eine Höhenverstelleinheit (190A) zugeordnet ist, die eine Höhenverstellung des oder der Aufnahmeelemente (170) entlang der y-Achse (Y) ermöglicht/ermöglichen, wodurch bei der Fertigung des Bauteils (B) zur Schichtbildung eine synchronisierte überlagerte Relativbewegung aus stetiger Rotation und kontinuierlicher oder diskontinuierlicher Höhenverstellung in dem Abstand (A) zwischen den Prozesseinheiten und der Arbeits- und Transportplattform (2) erfolgt, sodass durch die Relativbewegung zwischen den Prozesseinheiten und der Arbeits- und Transportplattform (2), bedingt durch die ringförmige Abfolge der einzeln hintereinander oder in einem Modul zusammengefassten hintereinander aufeinanderfolgenden Vorrichtungen (1, 1a; 1', 1a', 1", 1a") der Prozesseinheiten gegenüber der Arbeits- und Transportplattform (2) in einem Durchgang (I) bei einer Drehung der Prozesseinheiten um 360° um den Mittelpunkt (M) gleichzeitig mehrere Schichten ausgebildet werden, wobei die Anzahl der Schichten der Anzahl der in einer ringförmigen Abfolge hintereinander angeordneten Prozesseinheiten entspricht,
wobei das Aufnahmeelement (170) oder die mehreren Aufnahmeelementen als Kragelement/Kragelementen ausgebildet wird/werden, welches die Auftragsvorrichtungen (1a, 1a', 1a") und die Verfestigungsvorrichtungen (1 , 1 ', 1 ") sowie die Erwärmungsvorrichtung (1b) aufnimmt, wobei zwischen der Unterkante des Kragelementes (170) in einer maximalen Höhe (hmax) und einer Null-Höhe (h0) der Arbeits- und Transportplattform (2) ein maximaler Höhenabstand (Δhmax) vorliegt, wobei bei diesem maximalen Höhenabstand (Δhmax) das mindestens eine Bauteil (B), in dem zur Herstellung vorgesehenen Bauraum (BR) fertiggestellt ist.

11. Verfahren nach Anspruch 10, **dadurch gekennzeichnet, dass** das mindestens eine Bauteil (B) in dem ersten Vorrichtungsteil gefertigt und nach der Fertigung von dem ersten Vorrichtungsteil in ein zweites Vorrichtungsteil transportiert und dem zweiten Vorrichtungsteil manuell und/oder automatisiert entnommen wird.

12. Verfahren nach Anspruch 11, **dadurch gekennzeichnet, dass** das mindestens eine Bauteil (B) vor seiner Entnahme aus dem zweiten Vorrichtungsteil automatisiert gereinigt wird.

## Claims

1. Device for the continuous additive manufacture of three-dimensional components (B) which are formed from a plurality of layers which build one on top of the other, wherein a plurality of solidifying devices (1, 1', 1") for solidifying an applied powdered material are arranged one behind the other in an annular sequence with respect to a working and transport platform (2), and a distance (A) from each individual solidifying device (1, 1', 1") to the working and transport platform (2) increases from a first solidifying device (1) to a last solidifying device (1") of the sequence, so that when a relative movement takes place between the solidifying devices (1, 1', 1") and the working and transport platform (2) for layer formation, a layer is simultaneously formed by each further solidifying device (1', 1") following the first solidifying device (1) on the layer formed by means of the respectively preceding solidifying device (1, 1', 1") in the sequence,
wherein one application device (1, 1a', 1a") of a plurality of application devices (1a, 1a', 1a") for applying the powdered material and one solidifying device (1, 1', 1") of the plurality of solidifying devices (1, 1', 1") for solidifying the material form a process unit in each case, wherein one of the plurality of solidifying devices (1, 1', 1") directly follows one of the plurality of application devices (1a, 1a', 1a") in the annular sequence, wherein the successive devices (1, 1a; 1', 1a, 1", 1a") of the process units are arranged in the annular sequence individually one behind the other or one behind the other combined in a module, wherein the plurality of application devices (1a, 1a', 1a"), which are formed in process units, and the plurality of solidifying devices (1, 1', 1"), in the annular sequence, starting from a center point (M) of a circle, are arranged radially with respect to a y-axis (Y) passing through the center point (M), on the circle line having a predefinable circumference, so that the process units (1, 1 a; 1', 1a', 1", 1a") rotate about the center point (M) lying on the y-axis (Y) with respect to the working and transport platform (2) when a relative movement takes place between the process units and the working and transport platform (2) for layer formation, and a heating device (1b, 1b', 1b") is associated with each process unit or jointly with a plurality of process units, which, starting from a center point (M) of the circle, is/are arranged radially with respect to the y-axis (Y) passing through the center point (M), on the circle line having a predefinable circumference, so that the heating device(s) (1b, 1b', 1b") rotate(s) about the center point (M) lying on the y-axis (Y) with respect to the working and transport platform (2) when a relative movement takes place between the process units and the working and transport platform (2) for layer formation,
**characterized in that**
the powdered material is fed to the application devices (1a, 1a', 1a") of the process units (1, 1a; 1', 1a, 1", 1a") centrally via a feed device (120) comprising a main feed (120A) and a distributor (120B) which supplies the plurality of application devices (1a, 1a', 1a") of the process units (1, 1a; 1', 1a, 1", 1a") with the powdered material via decentralized sub-feeds (120C, 120C', 120C"), wherein the sub-feeds (120C, 120C', 120C") are in each case either connected to an annular receiving element (170) or to a plurality of receiving elements which hold(s) at least the plurality of application devices (1a, 1a', 1a") of the process units (1, 1a; 1', 1a, 1", 1a"), wherein the sub-feeds (120C, 120C', 120C") are flexible with respect to the distributor and/or with respect to the process units or are designed as movable sub-feeds, wherein the annular receiving element (170) or the plurality of receiving elements hold(s) the plurality of application devices (1a, 1a', 1a") designed as process units (1, 1a; 1', 1a, 1", 1a") and the plurality of solidifying devices (1, 1', 1"), wherein at least one height adjustment unit (190A) is associated with the annular receiving element (170) or the plurality of receiving elements, which height adjustment unit(s) allow(s) a height adjustment of the receiving element(s) (170) along the y-axis (Y), as a result of which, during the manufacture of the component (B), a synchronized relative movement takes place between the plurality of solidifying devices (1,1',1") and the plurality of application devices (1a, 1a', 1a") with respect to the working and transport platform (2) for layer formation, wherein the receiving element (170) or the plurality of receiving elements is/are designed as a collar element/collar elements which receive(s) the application devices (1a, 1a', 1a"), the solidifying devices (1, 1', 1") and the heating devices (1b), wherein a maximum vertical distance (Δhmax) is present between the lower edge of the collar element (170) at a maximum height (hmax) and a zero height (h0) of the working and transport platform (2), wherein at this maximum vertical distance (Δhmax), the at least one component (B) is produced in the construction space (BR) provided for production.

2. Device according to claim 1, **characterized in that** the working and transport platform (2) can be lowered with respect to the plurality of solidifying devices (1, 1', 1") arranged one behind the other in the annular sequence, or **in that** the plurality of solidifying devices (1, 1', 1") arranged one behind the other in the annular sequence can be raised with respect to the working and transport platform (2), so that when the layer formed by the last solidifying device (1") of the annular sequence is formed, the working and transport platform (2) is lowered or the solidifying devices (1, 1', 1") are raised and a renewed relative movement between the plurality of solidifying devices (1, 1', 1") and the working and transport platform (2) takes place for further layer formation and, starting with the first solidifying device (1) and the following solidifying devices (1', 1"), a further simultaneous layer formation takes place.

3. Device according to claim 1, **characterized in that** the working and transport platform (2) can be lowered with respect to the plurality of solidifying devices (1, 1', 1") arranged one behind the other in the annular sequence, or **in that** the plurality of solidifying devices (1, 1', 1") arranged one behind the other in the annular sequence can be raised with respect to the working and transport platform (2), so that when the working and transport platform (2) is lowered with respect to the plurality of solidifying devices (1, 1', 1") arranged one behind the other in the annular sequence or, alternatively or additionally, the plurality of solidifying devices (1, 1', 1") arranged one behind the other in the annular sequence is raised with respect to the working and transport platform (2), during the relative movement between the plurality of solidifying devices (1, 1', 1") and the working and transport platform (2) for layer formation, a spiral layer construction takes place.

4. Device according to claim 1, **characterized in that** the working and transport platform (2) is a continuous, self-contained conveyor belt.

5. Device according to claim 1, **characterized in that** below the annular receiving element (170) or the plurality of receiving elements, viewed in the direction of the y-axis (Y), which hold the plurality of application devices (1a, 1a', 1a") designed as process units (1, 1a; 1', 1a, 1", 1a") and the solidifying devices (1, 1', 1"), and above the working and transport platform (2), viewed in the direction of the y-axis (Y), a construction space (BR) is created for the powdered material, which, during the layer formation of the plurality of layers which build one on top of the other, can be changed discontinuously or continuously by means of reversibly movable construction space delimiting elements (BR1, BR2) arranged to the side of the working and transport platform (2), wherein the construction space delimiting elements (BR1, BR2) are movable in the direction of the y-axis (Y) and are arranged transversely to the working and transport platform (2).

6. Device according to claim 1, **characterized in that** at least one height adjustment unit (190A, 190B) is associated with the construction space delimiting elements (BR1, BR2) arranged in a reversibly movable manner.

7. Device according to claim 1, **characterized in that** the device comprises a first device part for producing the at least one component (B) according to at least one of claims 1 to 6 and a second device part for removing the at least one component (B).

8. Device according to claim 7, **characterized in that** at least one working and transport platform (2; 21, 22) is arranged in the first and the second device part, which platform is designed as an open conveyor belt having opposite ends in the direction of movement of the working and transport platform (2; 21, 22), wherein the open conveyor belt (2; 21, 22) having at least one opposite end has segments (2-n) which are connected to one another.

9. Device according to claims 7 and 8, **characterized in that** the first device part for producing the at least one component (B) and the second device part for removing the at least one component (B) comprise at least one cleaning unit (301, 302, 303) within the first and/or second device part, wherein
• a first cleaning unit (301) is arranged for cleaning a table (150B-1) which supports the at least one working and transport platform (2; 21, 22) within the first device part, and/or
• a second cleaning unit (302) is arranged for cleaning the at least one working and transport platform (2; 21, 22) and the at least one component (B), which platform supports the at least one component (B) on the at least one working and transport platform (2; 21, 22) within the second device part, and/or
• a third cleaning unit (301) is arranged for cleaning the table (250B-1) which supports the at least one working and transport platform (2; 21, 22) within the first device part.

10. A method for the continuous additive manufacture of three-dimensional components (b) which are formed from a plurality of layers which build one on top of the other, wherein a plurality of solidifying devices (1, 1', 1") for solidifying an applied powdered material are arranged one behind the other in a sequence with respect to a working and transport platform (2), wherein the distance (A) from each individual solidifying device (1, 1', 1") to the working and transport platform (2) increases from a first solidifying device (1) to a last solidifying device (1") of an annular sequence, wherein a relative movement takes place between the solidifying devices (1, 1', 1") and the working and transport platform (2) for layer formation, so that a layer is simultaneously formed by each further solidifying device (1', 1") following the first solidifying device (1) on the layer formed by means of the respectively preceding solidifying device (1, 1', 1") in the sequence, wherein one application device (1, 1a', 1a") of a plurality of application devices (1a, 1a', 1a") for applying the powdered material and one solidifying device (1, 1', 1") of the plurality of solidifying devices (1, 1', 1") for solidifying the material form a process unit in each case, wherein one of the plurality of solidifying devices (1, 1', 1") directly follows one of the plurality of application devices (1a, 1a', 1a") in the annular sequence, wherein the successive devices (1, 1a; 1', 1a, 1", 1a") of the process units are arranged in the annular sequence individually one behind the other or one behind the other combined in a module, wherein the plurality of application devices (1a, 1a', 1a"), which are formed in process units, and the plurality of solidifying devices (1, 1', 1"), in the annular sequence, starting from a center point (M) of a circle, are arranged radially with respect to a y-axis (Y) passing through the center point (M), on the circle line having a predefinable circumference, so that the process units (1, 1 a; 1', 1a', 1", 1a") rotate about the center point (M) lying on the y-axis (Y) with respect to the working and transport platform (2) when a relative movement takes place between the process units and the working and transport platform (2) for layer formation, and a heating device (1b, 1b', 1b") is associated with each process unit or jointly with a plurality of process units, which, starting from a center point (M) of the circle, is/are arranged radially with respect to the y-axis (Y) passing through the center point (M), on the circle line having a predefinable circumference, so that the heating device(s) (1b, 1b', 1b") rotate(s) about the center point (M) lying on the y-axis (Y) with respect to the working and transport platform (2) when a relative movement takes place between the process units and the working and transport platform (2) for layer formation,
**characterized in that**
the layers produced in the manufacture of the at least one component (B) by the relative movement between the solidifying devices (1, 1', 1") and the working and transport platform (2) are formed by the plurality of solidifying devices (1, 1', 1") arranged one behind the other in an annular sequence, wherein the powdered material is fed to the application devices (1a, 1a', 1a") of the process units (1, 1a; 1', 1a, 1", 1a") centrally via a feed device (120) comprising a main feed (120A) and a distributor (120B) which supplies the plurality of application devices (1a, 1a', 1a") of the process units (1, 1a; 1', 1a, 1", 1a") with the powdered material via decentralized sub-feeds (120C, 120C', 120C"), wherein the sub-feeds (120C, 120C', 120C") are in each case either connected to an annular receiving element (170) or to a plurality of receiving elements which hold(s) at least the plurality of application devices (1a, 1a', 1a") of the process units (1, 1a; 1', 1a, 1", 1a"), wherein the sub-feeds (120C, 120C', 120C") are flexible with respect to the distributor and/or with respect to the process units or are designed as movable sub-feeds, wherein the annular receiving element (170) or the plurality of receiving elements hold(s) the plurality of application devices (1a, 1a', 1a") designed as process units (1, 1a; 1', 1a, 1", 1a") and the plurality of solidifying devices (1, 1', 1"), wherein at least one height adjustment unit (190A) is associated with the annular receiving element (170) or the plurality of receiving elements, which height adjustment unit(s) allow(s) a height adjustment of the receiving element(s) (170) along the y-axis (Y), as a result of which, during the manufacture of the component (B), a synchronized superimposed relative movement consisting of constant rotation and continuous or discontinuous height adjustment in the distance (A) between the process units and the working and transport platform (2) takes place for layer formation, so that, as a result of the relative movement between the process units and the working and transport platform (2), due to the annular sequence of the successive devices (1, 1a; 1', 1a, 1", 1a") of the process units, which are arranged individually one behind the other or one behind the other combined in a module, with respect to the working and transport platform (2), a plurality of layers is formed simultaneously in one pass (I) during a rotation of the process units through 360° about the center point (M), wherein the number of layers corresponds to the number of process units arranged one behind the other in an annular sequence, wherein the receiving element (170) or the plurality of receiving elements is/are designed as a collar element/collar elements which receive(s) the application devices (1a, 1a', 1a"), the solidifying devices (1, 1', 1") and the heating devices (1b), wherein a maximum vertical distance (Δhmax) is present between the lower edge of the collar element (170) at a maximum height (hmax) and a zero height (h0) of the working and transport platform (2), wherein at this maximum vertical distance (Δhmax), the at least one component (B) is produced in the construction space (BR) provided for production.

11. Method according to claim 10, **characterized in that** the at least one component (B) is manufactured in the first device part and, after manufacture, is transported from the first device part into a second device part and is removed manually and/or automatically from the second device part.

12. Method according to claim 11, **characterized in that** the at least one component (B) is cleaned automatically before removal from the second device part.

## Revendications

1. Dispositif de fabrication additive en continu de composants tridimensionnels (B) formés par une pluralité de couches se superposant les unes aux autres, dans lequel de nombreux dispositifs de solidification (1, 1', 1") destinés à la solidification d'un matériau en poudre appliqué sont disposés dans une succession annulaire, les uns derrière les autres, par rapport à une plateforme de travail et de transport (2), et une distance (A) de chaque dispositif de solidification (1, 1', 1") individuel par rapport à la plateforme de travail et de transport (2) s'agrandit en partant d'un premier dispositif de solidification (1) jusqu'à un dernier dispositif de solidification (1") de la succession, de sorte que lorsqu'un mouvement relatif entre les dispositifs de solidification (1, 1', 1") et la plateforme de travail et de transport (2) se produit pour une formation de couches, simultanément avec chaque autre dispositif de solidification (1', 1") suivant le premier dispositif de solidification (1), une couche est formée sur la couche formée à l'aide du dispositif de solidification (1, 1', 1") précédent respectif dans la succession,
dans lequel un dispositif d'application (1a, 1a', 1a") respectif d'une pluralité de dispositifs d'application (1a, 1a', 1a") pour l'application du matériau en poudre et un dispositif de solidification (1, 1', 1") respectif de la pluralité de dispositifs de solidification (1, 1', 1") pour la solidification du matériau forment une unité de traitement, l'un de la pluralité de dispositifs de solidification (1, 1', 1") de la succession annulaire suivant directement l'un de la pluralité de dispositifs d'application (1a, 1a', 1a"), les dispositifs consécutifs (1, 1a ; 1', 1a', 1", 1a") des unités de traitement dans la succession annulaire étant disposés l'un après l'autre individuellement ou l'un après l'autre de manière regroupée dans un module, les nombreux dispositifs d'application (1a, 1a', 1a") constitués en unités de traitement et les nombreux dispositifs de solidification (1, 1', 1") de la succession annulaire étant disposés, en partant d'un point central (M) d'un cercle, sur la ligne circulaire avec une circonférence prédéfinissable, radialement par rapport à un axe Y (Y) passant par le point central (M), de sorte que les unités de traitement (1, 1a; 1', 1a', 1", 1a") tournent autour du point central (M) se trouvant sur l'axe Y (Y) en face de la plateforme de travail et de transport (2) lorsqu'un mouvement relatif se produit entre les unités de traitement et la plateforme de travail et de transport (2) pour une formation de couches et un dispositif de chauffage (1b, 1b', 1b") étant associé à chaque unité de traitement ou à plusieurs unités de traitement conjointement, laquelle ou lesquelles unités de traitement étant disposée(s), en partant du point central (M) du cercle, sur la ligne circulaire avec une circonférence prédéfinissable, radialement par rapport à l'axe Y (Y) passant par le point central (M), de sorte que le dispositif de chauffage (1b, 1b', 1b") tourne autour du point central (M) se trouvant sur l'axe Y (Y) en face de la plateforme de travail et de transport (2) lorsqu'un mouvement relatif se produit entre les unités de traitement et la plateforme de travail et de transport (2) pour une formation de couches,
**caractérisé en ce que**
l'amenée du matériau en poudre aux dispositifs d'application (1a, 1a', 1a") des unités de traitement (1, 1a ; 1', 1a', 1", 1a") s'effectue de manière centralisée par l'intermédiaire d'un dispositif d'amenée (120) qui comprend un conduit principal (120A) et un distributeur (120B) alimentant la pluralité de dispositifs d'application (1a, 1a', 1a") des unités de traitement (1, 1a; 1', 1a', 1", 1a") avec le matériau en poudre par l'intermédiaire de convoyeurs d'objet (120C, 120C', 120C") répartis, les convoyeurs d'objet (120C, 120C', 120C") étant chacun en communication soit avec un élément de réception (170) annulaire soit avec plusieurs éléments de réception, lequel ou lesquels éléments de réception maintiennent au moins la pluralité de dispositifs d'application (1a, 1a', 1a") des unités de traitement (1, 1a ; 1', 1a', 1", 1a"), les convoyeurs d'objet (120C, 120C', 120C") étant réalisés flexibles par rapport au distributeur et/ou par rapport aux unités de traitement ou réalisés sous forme de convoyeurs d'objet mobiles, l'élément de réception (170) annulaire ou la pluralité d'éléments de réception maintenant la pluralité de dispositifs d'application (1a, 1a', 1a") constitués en unités de traitement (1, 1a ; 1', 1a', 1", 1a") et la pluralité de dispositifs de solidification (1, 1', 1"), au moins une unité de réglage de hauteur (190A) étant associée à l'élément de réception (170) annulaire ou à la pluralité d'éléments de réception, laquelle unité de réglage de hauteur permet un réglage de hauteur de l'élément de réception (170) ou des éléments de réception le long de l'axe Y (Y), ce qui, lors de la fabrication du composant (B) pour la formation de couches, donne lieu à un mouvement relatif synchronisé entre la pluralité de dispositifs de solidification (1, 1', 1") et la pluralité de dispositifs d'application (1a, 1a', 1a") par rapport à la plateforme de travail et de transport (2), l'élément de réception (170) ou la pluralité d'éléments de réception étant réalisé(s) sous forme d'élément/d'éléments en console qui reçoit/reçoivent les dispositifs d'application (1a, 1a', 1a") et les dispositifs de solidification (1, 1', 1") ainsi que le dispositif de chauffage (1b), un espacement en hauteur (Δhmax) maximal existant entre le bord inférieur de l'élément en console (170) à une hauteur maximale (hmax) et une hauteur nulle (h0) de la plateforme de travail et de transport (2), l'au moins un composant (B) étant finalisé dans l'espace de construction (BR) prévu pour la fabrication, avec cet espacement en hauteur (Δhmax) maximal.

2. Dispositif selon la revendication 1, **caractérisé en ce que** la plateforme de travail et de transport (2) peut être abaissée par rapport à la pluralité de dispositifs de solidification (1, 1', 1") disposés les uns derrière les autres dans la succession annulaire ou **en ce que** la pluralité de dispositifs de solidification (1, 1', 1") disposés les uns derrière les autres dans la succession annulaire peuvent être soulevés par rapport à la plateforme de travail et de transport (2) de sorte que, lorsque la couche formée par le dernier dispositif de solidification (1") de la succession annulaire est formée, la plateforme de travail et de transport (2) est abaissée ou les dispositifs de solidification (1, 1', 1") sont soulevés et il se produit un nouveau mouvement relatif entre la pluralité de dispositifs de solidification (1, 1', 1") et la plateforme de travail et de transport (2) pour la formation supplémentaire de couches, et une autre formation concomitante de couches s'effectue à l'aide du premier dispositif de solidification (1) pour commencer, ainsi que des dispositifs de solidification (1', 1") suivants.

3. Dispositif selon la revendication 1, **caractérisé en ce que** la plateforme de travail et de transport (2) peut être abaissée par rapport à la pluralité de dispositifs de solidification (1, 1', 1") disposés les uns derrière les autres dans la succession annulaire ou **en ce que** la pluralité de dispositifs de solidification (1, 1', 1") disposés les uns derrière les autres dans la succession annulaire peuvent être soulevés par rapport à la plateforme de travail et de transport (2) de sorte qu'il se produit une structure en couches en forme de spirale si, pendant le mouvement relatif entre la pluralité de dispositifs de solidification (1, 1', 1") et la plateforme de travail et de transport (2) pour une formation de couches, il se produit un abaissement de la plateforme de travail et de transport (2) par rapport à la pluralité de dispositifs de solidification (1, 1', 1") disposés les uns derrière les autres dans la succession annulaire ou, alternativement ou en complément, il se produit un soulèvement de la pluralité de dispositifs de solidification (1, 1', 1") disposés les uns derrière les autres dans la succession annulaire par rapport la plateforme de travail et de transport (2).

4. Dispositif selon la revendication 1, **caractérisé en ce que** la plateforme de travail et de transport (2) est une bande transporteuse sans fin et fermée en soi.

5. Dispositif selon la revendication 1, **caractérisé en ce que**, en dessous de l'élément de réception (170) annulaire ou de la pluralité d'éléments de réception, vu dans la direction de l'axe Y (Y), lesquels éléments de réception maintiennent la pluralité de dispositifs d'application (1a, 1a', 1a") constitués en unités de traitement (1, 1a ; 1', 1a', 1", 1a") et les dispositifs de solidification (1, 1', 1"), au-dessus de la plateforme de travail et de transport (2), vu dans la direction de l'axe Y (Y), un espace de construction (BR) pour le matériau en poudre est créé, lequel espace, lors de la formation de couches de la pluralité de couches se superposant les unes aux autres, peut être modifié de manière discontinue ou continue à l'aide d'éléments de délimitation d'espace de construction (BR1, BR2) disposés de manière à pouvoir être déplacés de façon réversible du côté de la plateforme de travail et de transport (2), les éléments de délimitation d'espace de construction (BR1, BR2) étant disposés de manière à pouvoir être déplacés dans la direction de l'axe Y(Y) et transversalement à la plateforme de travail et de transport (2).

6. Dispositif selon la revendication 1, **caractérisé en ce qu'**au moins une unité de réglage de hauteur (190A, 190B) est associée aux éléments de délimitation d'espace de construction (BR1, BR2) disposés de manière à pouvoir être déplacés de façon réversible.

7. Dispositif selon la revendication 1, **caractérisé en ce que** le dispositif comprend une première partie de dispositif pour la fabrication de l'au moins un composant (B) selon au moins l'une des revendications 1 à 6, et une seconde partie de dispositif pour le retrait de l'au moins un composant (B).

8. Dispositif selon la revendication 7, **caractérisé en ce qu'**au moins une plateforme de travail et de transport (2 ; 21, 22) est disposée dans la première et la deuxième partie de dispositif, laquelle est réalisée sous forme de bande transporteuse ouverte comportant des extrémités opposées dans la direction du mouvement de la plateforme de travail et de transport (2 ; 21, 22), la bande transporteuse (2, 21, 22) ouverte présentant au moins une extrémité opposée présentant des segments (2-n) reliés entre eux.

9. Dispositif selon les revendications 7 et 8, **caractérisé en ce que** la première partie de dispositif pour la fabrication de l'au moins un composant (B) et la seconde partie de dispositif pour le retrait de l'au moins un composant (B) comprend ou comprennent au moins une unité de nettoyage (301, 302, 303) à l'intérieur de la première et/ou de la seconde partie de dispositif, dans lequel
• une première unité de nettoyage (301) est agencée pour le nettoyage d'une table (150B-1), laquelle table supporte la au moins une plateforme de travail et de transport (2 ; 21, 22) à l'intérieur de la première partie de dispositif, et/ou
• une deuxième unité de nettoyage (302) est agencée pour le nettoyage de l'au moins une plateforme de travail et de transport (2 ; 21, 22) ainsi que de l'au moins un composant (B), laquelle deuxième unité de nettoyage supporte l'au moins un composant (B) sur l'au moins une plateforme de travail et de transport (2 ; 21, 22) à l'intérieur de la seconde partie de dispositif, et/ou
• une troisième unité de nettoyage (301) est agencée pour le nettoyage de la table (250B-1), laquelle table supporte la au moins une plateforme de travail et de transport (2 ; 21, 22) à l'intérieur de la première partie de dispositif.

10. Procédé de fabrication additive en continu de composants tridimensionnels (B) formés par une pluralité de couches se superposant les unes aux autres, dans lequel de nombreux dispositifs de solidification (1, 1', 1") destinés à la solidification d'un matériau en poudre appliqué sont disposés selon une succession annulaire, les uns derrière les autres, face à une plateforme de travail et de transport (2), dans lequel la distance (A) de chaque dispositif de solidification (1, 1', 1") individuel par rapport à la plateforme de travail et de transport (2) s'agrandit en partant d'un premier dispositif de solidification (1) jusqu'à un dernier dispositif de solidification (1") d'une succession annulaire, dans lequel, pour une formation de couches, un mouvement relatif est effectué entre les dispositifs de solidification (1, 1', 1") et la plateforme de travail et de transport (2), de sorte que, simultanément à l'aide de chaque autre dispositif de solidification (1', 1") suivant le premier dispositif de solidification (1), une couche est formée sur la couche formée à l'aide du dispositif de solidification (1, 1', 1") précédent respectif dans la succession, dans lequel un dispositif d'application (1a, 1a', 1a") respectif d'une pluralité de dispositifs d'application (1a, 1a', 1a") pour l'application du matériau en poudre et un dispositif de solidification (1, 1', 1") respectif de la pluralité de dispositifs de solidification (1, 1', 1") pour la solidification du matériau forment une unité de traitement, l'un des nombreux dispositifs de solidification (1, 1', 1") de la succession annulaire suivant directement l'un des nombreux dispositifs d'application (1a, 1a', 1a"), les dispositifs consécutifs (1, 1a ; 1', 1a', 1", 1a") des unités de traitement dans la succession annulaire étant disposés individuellement l'un après l'autre ou l'un après l'autre de manière regroupée dans un module, les nombreux dispositifs d'application (1a, 1a', 1a") constitués en unités de traitement et les nombreux dispositifs de solidification (1, 1', 1") de la succession annulaire étant disposés, en partant d'un point central (M) d'un cercle, sur la ligne circulaire avec une circonférence prédéfinissable, radialement par rapport à un axe Y (Y) passant par le point central (M), de sorte que les unités de traitement (1, 1a ; 1', 1a', 1", 1a") tournent autour du point central (M) se trouvant sur l'axe Y (Y) en face de la plateforme de travail et de transport (2) lorsqu'un mouvement relatif se produit entre les unités de traitement et la plateforme de travail et de transport (2) pour une formation de couches et un dispositif de chauffage (1b, 1b', 1b") étant associé à chaque unité de traitement ou à plusieurs unités de traitement conjointement, laquelle ou lesquelles unités de traitement étant disposée(s), en partant du point central (M) du cercle, sur la ligne circulaire avec une circonférence prédéfinissable, radialement par rapport à l'axe Y (Y) passant par le point central (M), de sorte que le/les dispositifs de chauffage (1, 1b', 1") tourne/-nt autour du point central (M) se trouvant sur l'axe Y (Y) en face de la plateforme de travail et de transport (2) lorsqu'un mouvement relatif se produit entre les unités de traitement et la plateforme de travail et de transport (2) pour une formation de couches,
**caractérisé en ce que**
les couches produites lors de la fabrication de l'au moins un composant (B) par le mouvement relatif entre les dispositifs de solidification (1, 1', 1") et la plateforme de travail et de transport (2) sont formées par la pluralité de dispositifs de solidification (1, 1', 1") disposés les uns derrière les autres selon une succession annulaire, l'amenée du matériau en poudre aux dispositifs d'application (1a, 1a', 1a") des unités de traitement (1, 1a ; 1', 1a', 1", 1a") s'effectuant de manière centralisée par l'intermédiaire d'un dispositif d'amenée (120) qui comprend un conduit principal (120A) et un distributeur (120B) alimentant la pluralité de dispositifs d'application (1a, 1a', 1a") des unités de traitement (1, 1a ; 1', 1a', 1", 1a") avec le matériau en poudre par l'intermédiaire de convoyeurs d'objet (120C, 120C', 120C") répartis, les convoyeurs d'objet (120C, 120C', 120C") étant chacun en communication soit avec un élément de réception (170) annulaire soit avec plusieurs éléments de réception, lequel ou lesquels éléments de réception maintiennent au moins la pluralité de dispositifs d'application (1a, 1a', 1a") des unités de traitement (1, 1a ; 1', 1a', 1", 1a"), les convoyeurs d'objet (120C, 120C', 120C") étant réalisés flexibles par rapport au distributeur et/ou par rapport aux unités de traitement ou réalisés sous forme de convoyeurs d'objet mobiles, l'élément de réception (170) annulaire ou la pluralité d'éléments de réception maintenant la pluralité de dispositifs d'application (1a, 1a', 1a") constitués en unités de traitement (1, 1a ; 1', 1a', 1", 1a") et la pluralité de dispositifs de solidification (1, 1', 1"), au moins une unité de réglage de hauteur (190A) étant associée à l'élément de réception (170) annulaire ou à la pluralité d'éléments de réception, laquelle unité de réglage de hauteur permet un réglage de hauteur de l'élément de réception (170) ou des éléments de réception le long de l'axe Y (Y), ce qui, lors de la fabrication du composant (B) pour la formation de couches, donne lieu à un mouvement relatif superposé synchronisé constitué d'une rotation constante et d'un régalage continu ou discontinu de la hauteur de la distance (A) entre les unités de traitement et la plateforme de travail et de transport (2), de sorte que le mouvement relatif entre les unités de traitement et la plateforme de travail et de transport (2), dû à la succession annulaire des dispositifs (1, 1a ; 1', 1a', 1", 1a") des unités de traitement se succédant un par un les uns derrière les autres ou réunis en un module par rapport à la plateforme de travail et de transport (2), permet de former simultanément plusieurs couches en un passage (I) lors d'une rotation des unités de traitement de 360° autour du point central (M), le nombre de couches correspondant au nombre d'unités de traitement disposées les unes derrière les autres dans une succession annulaire, l'élément de réception (170) ou la pluralité d'éléments de réception étant réalisé(s) sous forme d'élément/d'éléments en console qui reçoit/reçoivent les dispositifs d'application (1a, 1a', 1a") et les dispositifs de solidification (1, 1', 1") ainsi que le dispositif de chauffage (1b), un espacement en hauteur (Δhmax) maximal existant entre le bord inférieur de l'élément en console (170) à une hauteur maximale (hmax) et une hauteur nulle (h0) de la plateforme de travail et de transport (2), l'au moins un composant (B) étant finalisé dans l'espace de construction (BR) prévu pour la fabrication, avec cet espacement en hauteur (Δhmax) maximal.

11. Procédé selon la revendication 10, **caractérisé en ce que** l'au moins un composant (B) est réalisé dans la première partie de dispositif et, après la fabrication, transporté de la première partie de dispositif à la seconde partie de dispositif et retiré manuellement et/ou de manière automatisée de la seconde partie de dispositif.

12. Procédé selon la revendication 11, **caractérisé en ce que** l'au moins un composant (B) est nettoyé de manière automatisée avant d'être retiré de la seconde partie de dispositif.
